# EUROPEAN PATENT APPLICATION

(11) **EP 4 549 293 A1**
(43) Date of publication of application: **07.05.2025**
(21) Application number: 24178415.6
(22) Date of filing: 28.05.2024
(51) Int. Cl.: B62D 25/14, B62D 29/00

(54) **STEEL INSERT PLASTIC COWL CROSS BAR**

(30) Priority: 02.11.2023 KR 20230150022
(71) Applicant: Hyundai Motor Company, Seoul 06797 (KR); Kia Corporation, Seocho-gu Seoul 06797 (KR)
(72) Inventor: Kong, Byung Seok, 18280 Gyeonggi-do (KR); Kim, Su Kyeong, 18280 Gyeonggi-do (KR); Choi, Sung Sik, 18280 Gyeonggi-do (KR); Yun, Jeong Min, 18280 Gyeonggi-do (KR)
(74) Representative: Hoffmann Eitle

(57) **Abstract**

A steel insert plastic cowl cross bar includes a plastic material injection-molded to a steel insert including a main beam a center support bracket, etc. such that the cowl cross bar is fabricated to have a complex structure including the steel insert and a plastic injection-molded part.

## Description

### BACKGROUND

### (a) Technical Field

The present disclosure relates to a steel insert plastic cowl cross bar, and more particularly to a steel insert plastic cowl cross bar for vehicles having a new structure in which a plastic material is injection molded on to a steel insert such that a complex structure including the steel insert and a plastic injection-molded part is provided.

### (b) Background Art

Generally, a cockpit module of a vehicle is a modular part in which a cowl cross bar, a crash pad, an air conditioning system, a dashboard, an airbag, a steering column, etc. are assembled to form a single assembly.

The cowl cross bar is a part of a cockpit module. The cowl cross bar is disposed in front of a driver seat and a passenger seat to extend in a left/right direction, i.e., a lateral direction. The cowl cross bar is fixed at opposite ends thereof to left and right panels of a vehicle body by mounting brackets or the like. As such, the cowl cross bar functions as a frame for supporting a crash pad, an air conditioning duct, a dashboard, an airbag, a steering column, and the like included in the cockpit module.

In addition, the cowl cross bar functions to prevent lateral bending or distortion of the vehicle body and to absorb collision energy caused by a collision or accident, protecting a passenger.

Generally, the cowl cross bar is fabricated using a steel material having excellent tensile strength and elongation characteristics or is fabricated using a plastic material suitable for weight reduction of a vehicle.

Of course, the cowl cross bar fabricated using the steel material provides an advantage in that it may be possible to easily absorb collision energy by virtue of excellent tensile strength and elongation characteristics. However, the cowl cross bar fabricated using steel material has problems in that the cowl cross bar is not suitable for realizing weight reduction of the vehicle due to an excessive weight thereof. In particular, the cowl cross bar fabricated using steel material causes an increase in weight of an electrified vehicle and thus, a degradation in fuel economy (km/kWh).

On the other hand, the cowl cross bar fabricated using the plastic material may achieve weight reduction and an improve fuel economy in an electrified vehicle because the cowl cross bar has a light weight, as compared to the cowl cross bar fabricated using the steel material. However, this cowl cross bar has problems in that the cowl cross bar may be broken by collision energy caused by a collision or accident due to insufficient strength and elongation characteristics. The cowl cross bar fabricated using plastic material may be deformed while being easily pushed out toward a vehicle interior, thereby injuring a passenger.

### SUMMARY OF THE DISCLOSURE

The present disclosure has been made in an effort to solve the above-described problems associated with the prior art. An object of the present disclosure is to provide a steel insert plastic cowl cross bar in which a plastic material is injection molded on to a steel insert including a main beam, a center support bracket, and the like such that the cowl cross bar is fabricated to have a complex structure including the steel insert and a plastic injection-molded part. Thereby, the steel insert plastic cowl cross bar is capable of realizing weight reduction and improving fuel economy of an electrified vehicle, preventing phenomena of breakage and deformation caused by collision energy by virtue of an increase in rigidity, and achieving an enhancement in isolation performance against road vibration.

Objects of the present disclosure are not limited to the above-described objects. Other objects of the present disclosure not yet described should be more clearly understood by those of ordinary skill in the art from the following detailed description. In addition, objects of the present disclosure may be accomplished by means defined in the appended claims and combinations thereof.

In one aspect, the present disclosure provides a steel insert plastic cowl cross bar including a steel insert including a main beam and a center support bracket mounted to the main beam. The cowl cross bar includes a plastic injection-molded part injection-molded on the steel insert. The center support bracket includes a main frame mounted to a lower portion of a vehicle body, a neck frame formed at an upper portion of the main frame, and first and second mounting plates formed at an upper portion of the neck frame and mounted to the main beam. Through holes for molding a vehicle body mounting bracket and removal of a mold are formed to extend through the main beam and the second mounting plate in a forward/rearward direction. The plastic injection-molded part includes a main injection-molded part molded on the main beam and the first and second mounting plates while overlapping therewith, a vehicle body mounting bracket molded on the main beam and the second mounting plate while overlapping therewith and protruding forward, while sealing the through holes, and a cockpit mounting bracket molded on one side portion of the neck frame, to protrude rearwards.

In an embodiment of the present disclosure, the center support bracket may further include a connecting plate mounted to the main beam while integrally interconnecting the first and second mounting plates.

In another aspect, the present disclosure provides a steel insert plastic cowl cross bar including a steel insert including a main beam and a center support bracket mounted to the main beam. The cowl cross bar further includes a plastic injection-molded part injection-molded on the steel insert. The center support bracket includes a main frame mounted to a lower portion of a vehicle body, a neck frame formed at an upper portion of the main frame, and first and second mounting plates formed at an upper portion of the neck frame and mounted to the main beam. The plastic injection-molded part includes a main injection-molded part molded on the main beam and the first and second mounting plates while overlapping therewith, a vehicle body mounting bracket molded on the main beam and the second mounting plate while overlapping therewith and protruding forward, and a cockpit mounting bracket molded on one side portion of the neck frame and protruding rearward.

In an embodiment of the present disclosure, the center support bracket may further include a connecting plate mounted to the main beam while integrally interconnecting the first and second mounting plates.

In another aspect, the present disclosure provides a steel insert plastic cowl cross bar including a steel insert including a main beam and a center support bracket mounted to the main beam. The cowl cross bar further includes a plastic injection-molded part injection-molded on the steel insert. The center support bracket includes a main frame mounted to a lower portion of a vehicle body, a neck frame formed at an upper portion of the main frame, and first and second mounting plates formed at an upper portion of the neck frame and mounted to the main beam. A coring hole for mold removal and impact absorption is formed at upper portions of the main beam and the second mounting plate and extends therethrough in an upward/downward direction. The plastic injection-molded part includes a main injection-molded part molded on the main beam and the first and second mounting plates while overlapping therewith and includes a vehicle body mounting bracket molded on the main beam and the second mounting plate while overlapping therewith. The vehicle body mounting bracket may protrude forward while opening the coring hole. The plastic injection molded part may further include a cockpit mounting bracket molded on one side portion of the neck frame, to protrude rearwards.

In an embodiment of the present disclosure, the center support bracket may further include a connecting plate mounted to the main beam while integrally interconnecting the first and second mounting plates.

Other aspects and embodiments of the present disclosure are discussed below.

The above and other features of the present disclosure are also discussed below.

### BRIEF DESCRIPTION OF THE DRAWINGS

The above and other features of the present disclosure are described in detail below with reference to certain embodiments thereof illustrated in the accompanying drawings, which are given hereinbelow by way of illustration only, and thus do not limit the present disclosure, and wherein:
FIG. 1 is a perspective view showing a steel insert of a cowl cross bar according to a first embodiment of the present disclosure;
FIG. 2 is an enlarged perspective view showing a principal part of the steel insert of the cowl cross bar according to the first embodiment of the present disclosure;
FIG. 3 is a perspective view showing a steel insert plastic cowl cross bar according to the first embodiment of the present disclosure;
FIG. 4 is a perspective view showing a principal part of the steel insert plastic cowl cross bar according to the first embodiment of the present disclosure;
FIG. 5 is a cross-sectional view taken along line A-A in FIG. 4;
FIG. 6 is a cross-sectional view taken along line B-B in FIG. 4;
FIG. 7 is a cross-sectional view taken along line C-C in FIG. 4;
FIG. 8 is a cross-sectional view taken along line D-D in FIG. 4;
FIG. 9 is a perspective view showing a steel insert of a cowl cross bar according to a second embodiment of the present disclosure;
FIG. 10 is an enlarged perspective view showing a principal part of the steel insert of the cowl cross bar according to the second embodiment of the present disclosure;
FIG. 11 is a perspective view showing a steel insert plastic cowl cross bar according to the second embodiment of the present disclosure;
FIG. 12 is a perspective view showing a principal part of the steel insert plastic cowl cross bar according to the second embodiment of the present disclosure;
FIG. 13 is a cross-sectional view taken along line A-A in FIG. 12;
FIG. 14 is a cross-sectional view taken along line B-B in FIG. 12;
FIG. 15 is a cross-sectional view taken along line C-C in FIG. 12;
FIG. 16 is a cross-sectional view taken along line D-D in FIG. 12;
FIG. 17 is a perspective view showing a steel insert of a cowl cross bar according to a third embodiment of the present disclosure;
FIG. 18 is an enlarged perspective view showing a principal part of the steel insert of the cowl cross bar according to the third embodiment of the present disclosure;
FIG. 19 is a perspective view showing a steel insert plastic cowl cross bar according to the third embodiment of the present disclosure;
FIG. 20 is a perspective view showing a principal part of the steel insert plastic cowl cross bar according to the third embodiment of the present disclosure;
FIG. 21 is a cross-sectional view taken along line A-A in FIG. 20;
FIG. 22 is a cross-sectional view taken along line B-B in FIG. 20;
FIG. 23 is a cross-sectional view taken along line C-C in FIG. 20;
FIG. 24 is a cross-sectional view taken along line D-D in FIG. 20;
FIG. 25 is a perspective view showing a steel insert of a cowl cross bar according to a fourth embodiment of the present disclosure;
FIG. 26 is an enlarged perspective view showing a principal part of the steel insert of the cowl cross bar according to the fourth embodiment of the present disclosure;
FIG. 27 is a perspective view showing a steel insert plastic cowl cross bar according to the fourth embodiment of the present disclosure;
FIG. 28 is a perspective view showing a principal part of the steel insert plastic cowl cross bar according to the fourth embodiment of the present disclosure;
FIG. 29 is a cross-sectional view taken along line A-A in FIG. 28;
FIG. 30 is a cross-sectional view taken along line B-B in FIG. 28;
FIG. 31 is a cross-sectional view taken along line C-C in FIG. 28;
FIG. 32 is a cross-sectional view taken along line D-D in FIG. 28;
FIG. 33 is a perspective view showing a steel insert of a cowl cross bar according to a fifth embodiment of the present disclosure;
FIG. 34 is an enlarged perspective view showing a principal part of the steel insert of the cowl cross bar according to the fifth embodiment of the present disclosure;
FIG. 35 is a perspective view showing a steel insert plastic cowl cross bar according to the fifth embodiment of the present disclosure;
FIG. 36 is a perspective view showing a principal part of the steel insert plastic cowl cross bar according to the fifth embodiment of the present disclosure;
FIG. 37 is a cross-sectional view taken along line A-A in FIG. 36;
FIG. 38 is a cross-sectional view taken along line B-B in FIG. 36;
FIG. 39 is a cross-sectional view taken along line C-C in FIG. 36;
FIG. 40 is a cross-sectional view taken along line D-D in FIG. 36;
FIG. 41 is a perspective view showing a steel insert of a cowl cross bar according to a sixth embodiment of the present disclosure;
FIG. 42 is an enlarged perspective view showing a principal part of the steel insert of the cowl cross bar according to the sixth embodiment of the present disclosure;
FIG. 43 is a perspective view showing a steel insert plastic cowl cross bar according to the sixth embodiment of the present disclosure;
FIG. 44 is a perspective view showing a principal part of the steel insert plastic cowl cross bar according to the sixth embodiment of the present disclosure;
FIG. 45 is a cross-sectional view taken along line A-A in FIG. 44;
FIG. 46 is a cross-sectional view taken along line B-B in FIG. 44;
FIG. 47 is a cross-sectional view taken along line C-C in FIG. 44;
FIG. 48 is a cross-sectional view taken along line D-D in FIG. 44;
FIG. 49 is an enlarged perspective view showing formation of a fracture inducing notch at a vehicle body mounting bracket included in a plastic injection-molded part of the steel insert plastic cowl cross bar according to each of the first to sixth embodiments of the present disclosure;
FIG. 50 is a perspective view showing further formation of a steering lower mounting bracket at a steel insert of the steel insert plastic cowl cross bar according to each of the first to sixth embodiments of the present disclosure; and
FIGs. 51 and 52 are perspective views showing a state in which a plastic injection-molded bracket is injection-molded on the steering lower mounting bracket shown in FIG. 50.

It should be understood that the appended drawings are not necessarily to scale, presenting a somewhat simplified representation of various features illustrative of the basic principles of the present disclosure. The specific design features of embodiments of the present disclosure as disclosed herein, including, for example, specific dimensions, orientations, locations, and shapes will be determined in part by the particular intended application and use environment.

In the figures, the same reference numbers refer to the same or equivalent parts in the embodiments of the present disclosure illustrated throughout the several figures of the accompanying drawing.

### DETAILED DESCRIPTION

For embodiments of the present inventive concept disclosed herein, specific structural or functional descriptions are provided merely to describe the embodiments of the present disclosure. The embodiments of the present disclosure can be implemented in various forms. In addition, the present disclosure should not be interpreted as being limited to the embodiments described in the present specification. It should be understood that the present disclosure includes all changes, equivalents, or substitutions within the spirit and scope of the present inventive concept.

It should be understood that, although terms such as "first", "second", etc. may be used herein to describe various elements, these elements are not to be limited by these terms. These terms are only used to distinguish one element from another element. For instance, a "first" element discussed below could be termed a "second" element without departing from the scope of the present disclosure. Similarly, the "second" element could also be termed a "first" element.

In the case where an element is "connected" or "linked" to another element, it should be understood that the element may be directly connected or linked to the other element, or another element may be present therebetween. On the contrary, in the case where an element is "directly connected" or "directly linked" to another element, it should be understood that no other element is present therebetween. Other expressions describing a relation between constituent elements, such as "between ^{~}" and "immediately between ^{~}", or "adjacent to ^{~}" and "directly adjacent to ^{~}", and the like, should be construed in a similar manner.

Throughout the specification, the same reference numerals refer to the same elements. It should be noted that the terms used herein are merely used to describe a specific embodiment or embodiments of the present disclosure, and not to limit the present disclosure. Incidentally, unless clearly used otherwise, singular expressions include a plural meaning. In this application, the term "comprises" and/or "comprising" is intended to express the existence of the mentioned constituent element, step, operation, and/or device, and does not exclude the existence or addition of another constituent element, step, operation, and/or device. When a component, device, element, or the like of the present disclosure is described as having a purpose or performing an operation, function, or the like, the component, device, or element should be considered herein as being "configured to" meet that purpose or perform that operation or function.

Hereinafter, embodiments of the present disclosure are described in detail with reference to the accompanying drawings.

### First Embodiment

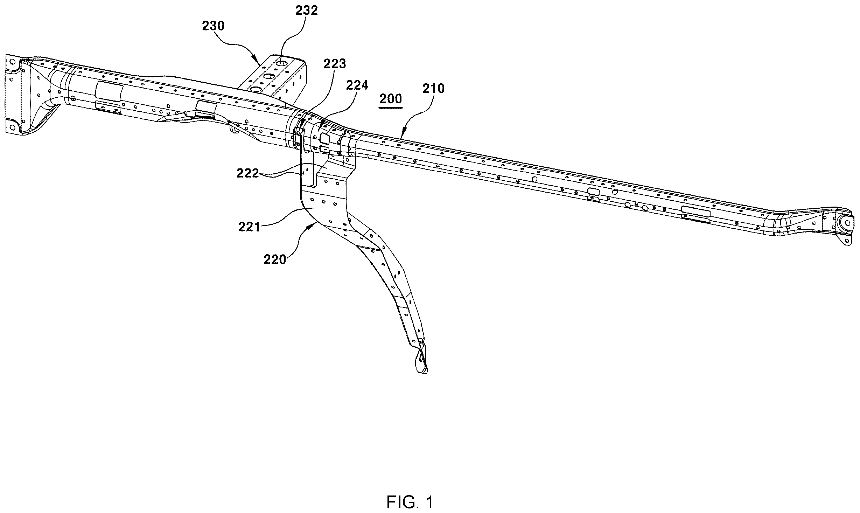

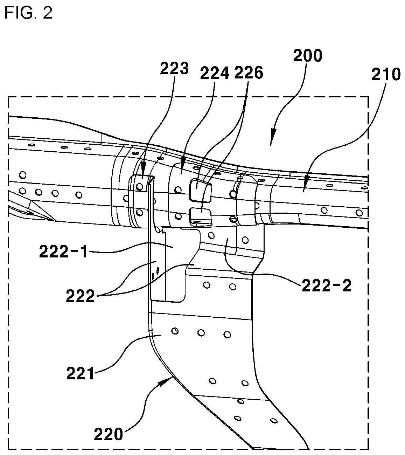

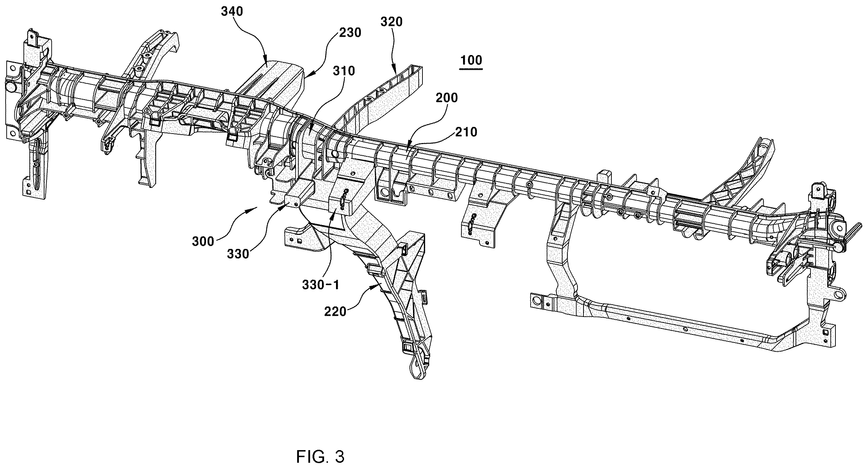

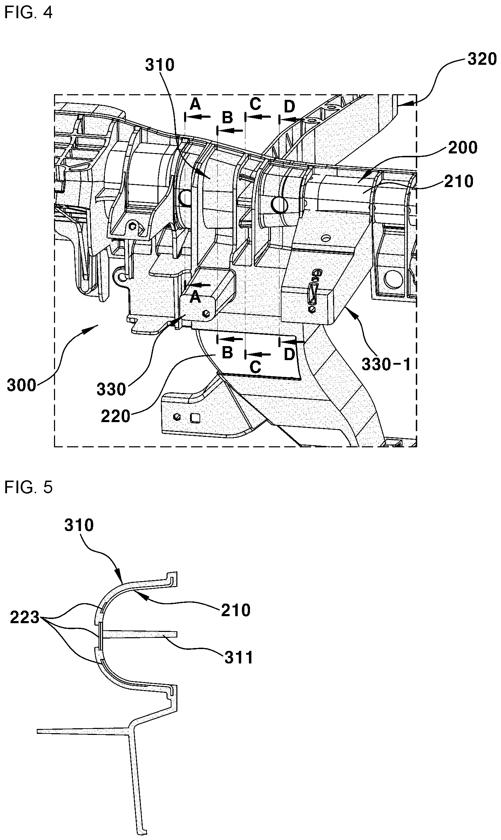

FIGs. 1 and 2 are perspective views showing a steel insert of a cowl cross bar according to a first embodiment of the present disclosure. FIGs. 3 and 4 are perspective views showing a steel insert plastic cowl cross bar according to the first embodiment of the present disclosure.

The steel insert plastic cowl cross bar according to the first embodiment of the present disclosure, which is designated by reference numeral "100", is fabricated by injecting a plastic material into a cavity of an injection mold under a predetermined pressure in a state in which a steel insert is inserted or disposed in the cavity of the injection mold. Accordingly, the steel insert plastic cowl cross bar has a complex structure of a steel insert 200 and a plastic injection-molded part 300.

As shown in FIG. 1, the steel insert 200 includes a main beam 210 fabricated to have a C-shaped cross-sectional structure opened forwards, a center support bracket 220 connected to a predetermined position of a rear surface of the main beam 210 and extending downwards, and a steering lower mounting bracket 230 connected to a predetermined position of a front surface of the main beam 210 and protruding forwards.

The main beam 210 is disposed in front of a driver seat and a passenger seat, to extend in a left/right direction, in other words, a lateral direction, and is fixed, at opposite ends thereof, to left and right panels of a vehicle body. Accordingly, the main beam 210 functions to maintain rigidity of the cowl cross bar 100 and functions as a frame for the cowl cross bar 100.

An upper end of the center support bracket 220 is mounted to the rear surface of the main beam 210. A lower end of the center support bracket 220 is mounted to a bottom panel of the vehicle body. Accordingly, the center support bracket 220 functions to support the main beam 210.

For this function, as shown in FIGs. 1 and 2, the center support bracket 220 includes a main frame 221, a lower end of the main frame mounted to the bottom panel of the vehicle body while extending in an upward/downward direction. The center support bracket 220 further includes a neck frame 222 integrally formed at an upper portion of the main frame 221 and a first mounting plate 223 and a second mounting plate 224 formed at an upper portion of the neck frame 222. The first mounting plate 223 and the second mounting plate 224 are mounted to the rear surface of the main beam 210 while overlapping therewith.

A molding hole 221-1 for molding of a cockpit mounting bracket 330, which is one constituent element of the plastic injection-molded part 300, is formed at one side portion of the neck frame 222 and extends through the neck frame 222. A bent portion 222-2, which has a "c"-shaped cross-section while protruding to be convex forwards, is formed at the other side portion of the neck frame 222, for easy removal of an injection mold.

In this case, the bent portion 222-2 not only provides a function for easily removal of an injection mold, but also functions to reinforce rigidity of the neck frame 222 in order to prevent deformation of the neck frame 222 caused by collision energy.

The first mounting plate 223 and the second mounting plate 224 are plate structures having curved cross-sections extending upwards while forming two branches extending from one side position (e.g., a first side position) and the other side position (e.g., a second side position) of the neck frame 222, respectively. The first mounting plate 223 and the second mounting plate 224 are mounted to the rear surface of the main beam 210 through welding or the like while overlapping therewith.

Since the first mounting plate 223 and the second mounting plate 224 are welded to the rear surface of the main beam 210 while overlapping therewith, it may be possible to reinforce rigidity of the main beam 210 and to prevent deformation of the main beam 210 caused by collision energy by virtue of the first mounting plate 223 and the second mounting plate 224.

In addition, a pair of through holes 226 are formed through the main beam 210 and the second mounting plate 224, to extend in a forward/rearward direction. The through holes 226 are not only used as spaces for molding of a vehicle body mounting bracket 320, which is one constituent element of the plastic injection-molded part 300, but also provide a function for easily removing an injection mold.

The steel insert 200 having the above-described configuration is inserted into a cavity of an injection mold. The steel insert is then subjected to an injection molding process in which a plastic material is injected into the cavity of the injection mold. As a result, the steel insert plastic cowl cross bar 100, which has a complex structure of the steel insert 200 and the plastic injection-molded part 300, may be fabricated.

As shown in FIGs. 3 and 4, the plastic injection-molded part 300, which is injection-molded on the steel insert 200, includes a main injection-molded part 310 molded on surfaces of the main beam 210 and the first and second mounting plates 223 and 224 of the steel insert 200 while overlapping therewith. Additionally, the plastic injection-molded part 300 includes the vehicle body mounting bracket 320, which is molded on the surfaces of the main beam 210 and the second mounting bracket 224 while overlapping therewith, to protrude forwards, while sealing the through holes 226 formed at the main beam 210 and the second mounting plate 224. Additionally, the plastic injection-molded part 300 includes the cockpit mounting bracket 330, which is molded to protrude rearwards while sealing a molding hole 222-1 of the neck frame 222.

The main injection-molded part 310 is injection-molded on surfaces of the main beam 210 and the first and second mounting plates 223 and 224 while overlapping the main beam 210 and the first and second mounting plates 223 and 224. As such, the main injection molded part 310 functions as a frame for the cowl cross bar 100, together with the main beam 210.

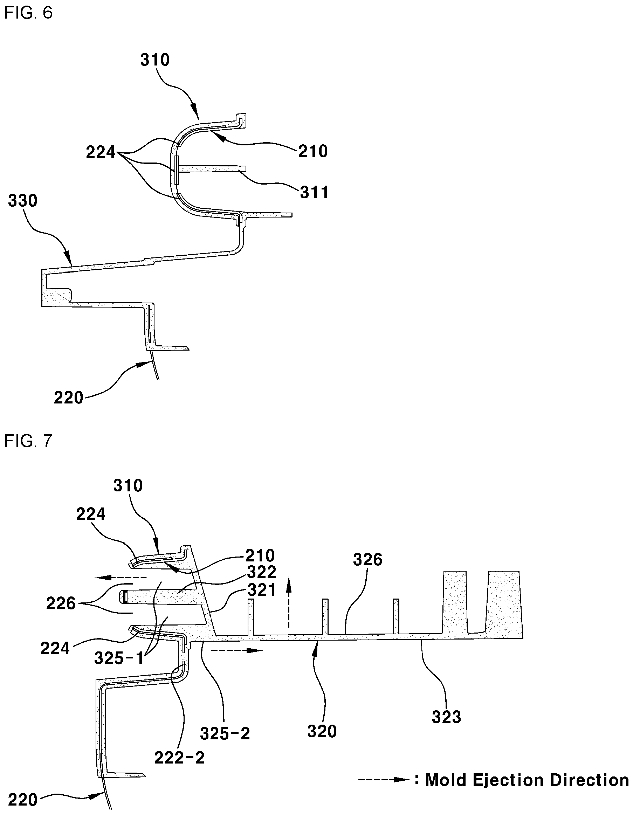

For this function, as shown in FIGs. 5 and 6, the main injection-molded part 310 includes a horizontal plate-shaped protector 311 not only molded on the rear surface of the main beam 210 and the surfaces of the first and second mounting plates 223 and 224 while overlapping therewith, but also molded on the front surface of the main beam 210, to protrude forwards, thereby protecting the main beam 210 from collision energy.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 overlap with the main beam 210 and, as such, rigidity of the main beam 210 is reinforced. As a result, it may be possible to prevent tearing or deformation of the cockpit mounting bracket 330 and an area therearound.

The vehicle body mounting bracket 320 is mounted, at a front end thereof, to a predetermined position of the vehicle body and, as such, not only functions to support the cowl cross bar 100, but also functions to primarily buffer collision energy caused by a collision.

For these functions, as shown in FIG. 7, the vehicle body mounting bracket 320 includes a reinforcing plate 321 formed at a front end of the main beam 210, configured to extend at an incline, while sealing the through holes 226 formed at the main beam 210 and the second mounting plate 224. The vehicle body mounting bracket further includes a reinforcing rib 322 connected to the front surface of the main beam 210 between the through holes 226 while extending rearwards from a rear surface of the reinforcing plate 321 and a vehicle body mounting plate 323 assembled or coupled to a predetermined position of the vehicle body while extending forwards from a lower portion of the reinforcing plate 321.

In this case, the reinforcing plate 321 and the reinforcing rib 322 of the vehicle body mounting bracket 320 are integrally connected to the main beam 210 of the steel insert 200 through injection molding. Accordingly, reinforcement of the rigidity of the vehicle body mounting bracket 320 may be achieved, and the vehicle body mounting bracket 320 may be maintained in a forwardly protruding state.

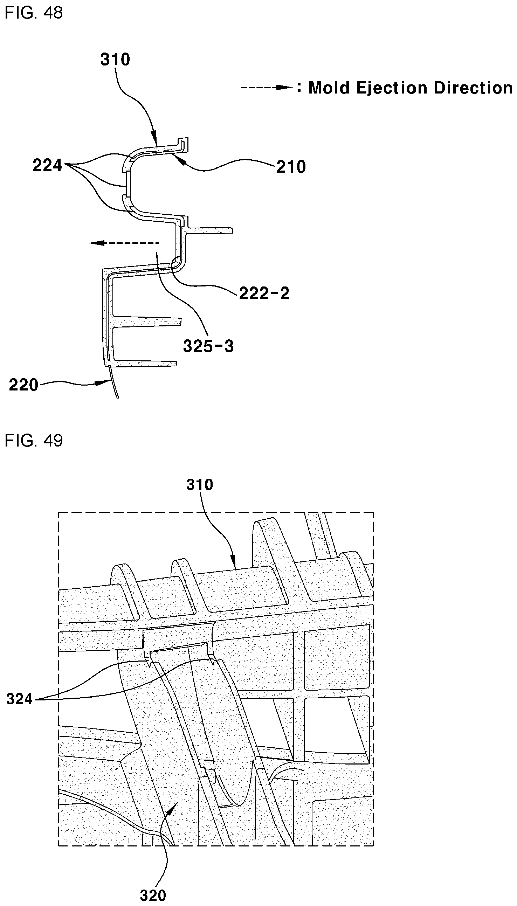

In addition, as shown in FIG. 49, a fracture inducing notch 324 may be further formed at a neck portion of the vehicle body mounting bracket 320. Accordingly, the vehicle body mounting bracket 320 may primarily buffer collision energy caused by a collision and may be fractured at the fracture inducing notch 324 when collision energy is equal to or higher than a predetermined level. Thus, it may be possible to minimize transfer of collision energy to the main beam 210 of the steel insert 200 and the main injection-molded part 310.

Among the constituent elements of the cockpit module, the cockpit mounting bracket 330 functions to provide a mounting surface for elements disposed behind the cowl cross bar 100.

For this function, as shown in FIG. 6, the cockpit mounting bracket 330 is formed to have a shape protruding rearwards while sealing the molding hole 222-1 formed at one side portion of the neck frame 222.

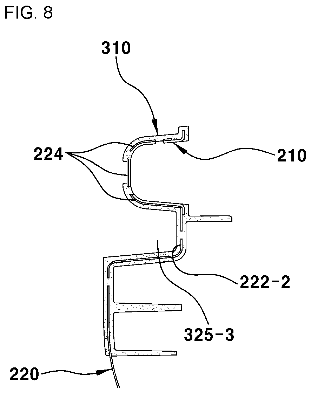

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 overlap with the main beam 210 surrounded by the main injection-molded part 310, thereby reinforcing rigidity, as shown in FIGs. 6 and 8. As a result, it may be possible to prevent tearing or deformation of the cockpit mounting bracket 330, which protrudes rearwards while sealing the molding hole 222-1, and an area around the cockpit mounting bracket 330.

In some examples, as shown in FIG. 4, another cockpit mounting bracket 330-1 may be further injection-molded on the main beam 210 at a position beyond the neck frame 222 of the center support bracket 220 such that the cockpit mounting bracket 330-1 protrudes rearwards. The cockpit mounting bracket 330-1 functions to provide a mounting surface for other constituent elements of the cockpit module.

Referring to FIG. 7, forward/rearward mold ejection spaces 325-1 for removal of an injection mold are formed over and beneath the reinforcing rib 322 of the vehicle body mounting bracket 320, respectively, by virtue of the through holes 226. A forward/rearward mold ejection space 325-2 for removal of an injection mold in a forward/rearward direction is formed beneath the vehicle body mounting plate 323 of the vehicle body mounting bracket 320. In addition, an upward/downward mold ejection space 326 for removal of an injection mold in an upward/downward direction is formed over the vehicle body mounting plate 323.

Referring to FIG. 8, a forward/rearward mold ejection space 325-3 is also formed at the plastic injection-molded part surrounding the bent portion 222-2 of the neck frame 222, by virtue of the bent portion 222-2.

Accordingly, easy removal of a mold after execution of an injection molding process may be achieved by virtue of the forward/rearward mold ejection spaces 325-1, 325-2, and 325-3, the upward/downward mold ejection space 326, and the like.

Meanwhile, the steering lower mounting bracket 230, which functions to support a lower portion of a steering column or the like, is integrally connected to the front surface of the main beam 210 of the steel insert 200 at a predetermined position while protruding forwards.

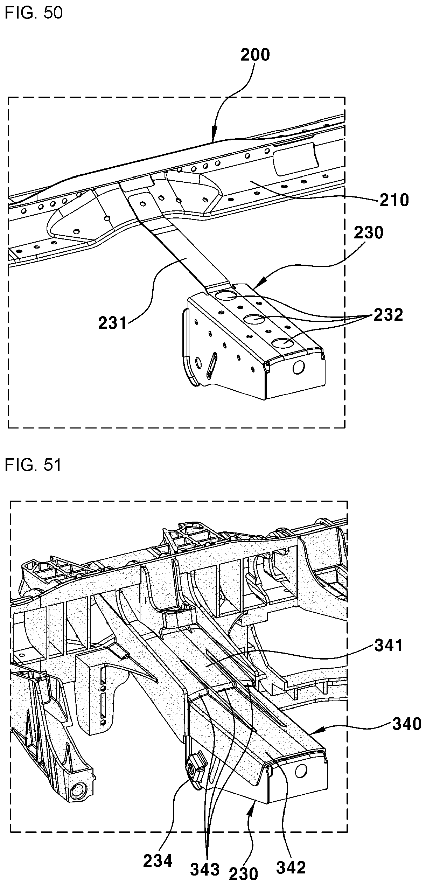

Referring to FIG. 50, the steering lower mounting bracket 230 of the steel insert 200 is integrally connected to the main beam 210 by a steel bar 231 having a predetermined length.

Accordingly, when collision energy is applied to the steering lower mounting bracket 230, the steel bar 231 buffers the collision energy while being deformed. As a result, the steering column or the like mounted to the steering lower mounting bracket 230 may be prevented from moving substantially from an original position thereof, and penetration of the steering column or the like into the vehicle interior may be minimized.

A plastic material is also injection-molded on to the steering lower mounting bracket 230 of the steel insert 200. As such, the plastic injection-molded part 300 includes a plastic injection-molded bracket 340 molded on the steel bar 231 and the steering lower mounting bracket 230.

In some examples, as shown in FIG. 50, a plurality of deformation inducing holes 232 are formed at an upper plate portion of the steering lower mounting bracket 230. The plurality of deformation inducing holes 232 induce deformation of the steering lower mounting bracket 230 when the steering lower mounting bracket 230 absorbs collision energy.

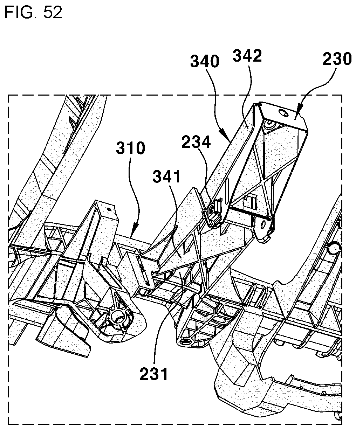

Referring to FIGs. 51 and 52, the plastic injection-molded bracket 340 may include a first injection-molded bracket portion 341 molded to surround the steel bar 231 and a second injection-molded bracket portion 342 molded to overlap with an upper surface, opposite side surfaces, and a lower surface of the steering lower mounting bracket 230.

In addition, as shown in FIG. 51, a step 343 for induction of bending and fracture is formed at a boundary between upper surfaces of the first and second injection-molded bracket portions 341 and 342.

In this case, a floating nut 234 is welded to the steering lower mounting bracket 230, to be bolted to the vehicle body. The floating nut 234 may be welded to the steering lower mounting bracket 230 before injection molding of the plastic injection-molded part 300 This is because it is difficult to mold the floating nut through plastic insert injection molding.

Accordingly, when collision energy caused by forward collision is applied to the steering lower mounting bracket 230, the deformation inducing hole 232 absorbs initial collision energy while being deformed, and deformation of the steering lower mounting bracket 230, such as bending and/or fracture, may be induced by the step 343 formed at the boundary between the first and second injection-molded bracket portions 341 and 342. In addition, the steel bar 231 is also deformed, thereby further buffering the collision energy. As a result, the steering column or the like mounted to the steering lower mounting bracket 230 may be prevented from moving substantially from an original position thereof, and penetration of the steering column or the like into the vehicle interior may be minimized. Thus, deformation of the cowl cross bar may be minimized, and injury of a passenger seated in the vehicle interior caused by the cowl cross bar may be prevented.

### Second Embodiment

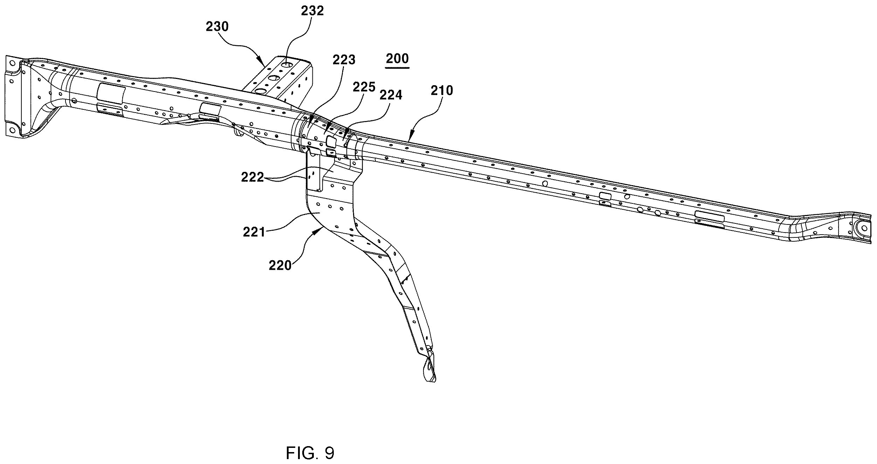

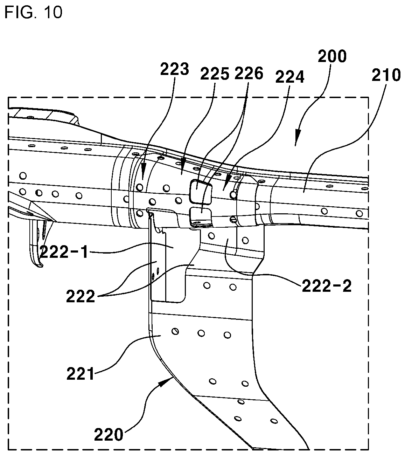

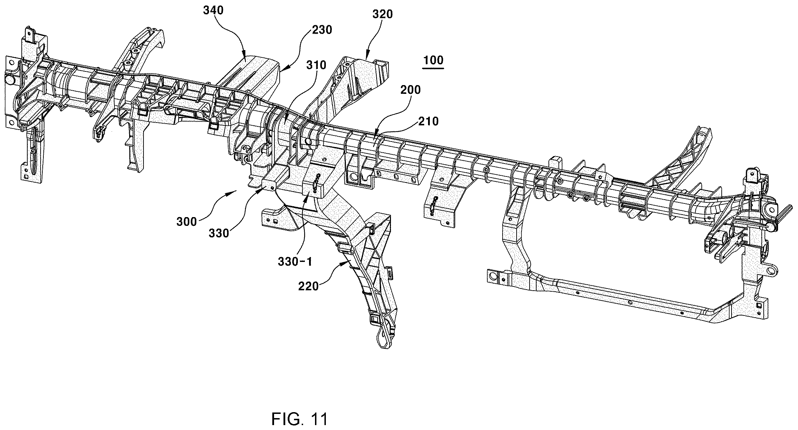

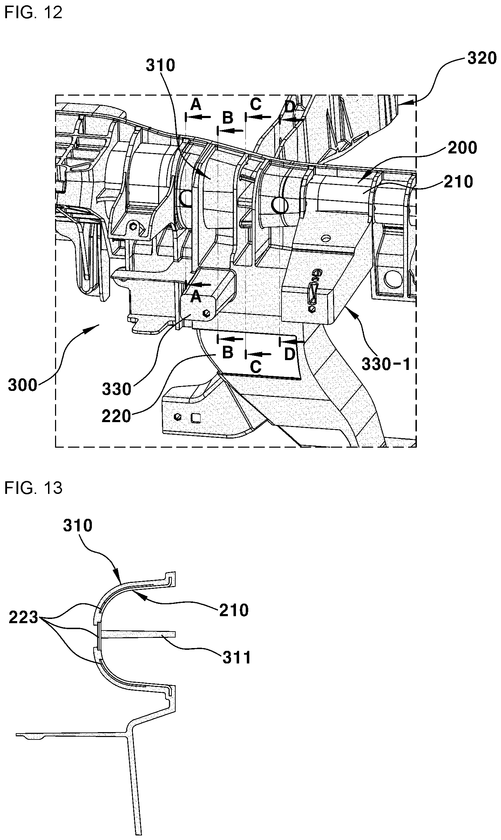

FIGs. 9 and 10 are perspective views showing a steel insert of a cowl cross bar according to a second embodiment of the present disclosure. FIGs. 11 and 12 are perspective views showing a steel insert plastic cowl cross bar according to the second embodiment of the present disclosure.

As shown in FIG. 10, the steel insert plastic cowl cross bar according to the second embodiment of the present disclosure is characterized in that a center support bracket 220 further includes a connecting plate 225 mounted to a main beam 210 of a steel insert 200 while overlapping therewith. The connecting plate 225 is configured to integrally interconnect first and second mounting plates 223 and 224.

The steel insert plastic cowl cross bar according to the second embodiment of the present disclosure, which is designated by reference numeral "100", is fabricated by injecting a plastic material into a cavity of an injection mold under a predetermined pressure in a state in which a steel insert is inserted in the cavity of the injection mold. Accordingly, the steel insert plastic cowl cross bar has a complex structure of a steel insert 200 and a plastic injection-molded part 300.

As shown in FIG. 9, the steel insert 200 includes a main beam 210 fabricated to have a C-shaped cross-sectional structure opened forwards, a center support bracket 220 connected to a predetermined position of a rear surface of the main beam 210 while extending downwards, and a steering lower mounting bracket 230 connected to a predetermined position of a front surface of the main beam 210 while protruding forwards.

The main beam 210 is disposed in front of a driver seat and a passenger seat, to extend in a left/right direction, in other words, a lateral direction, and is fixed, at opposite ends thereof, to left and right panels of a vehicle body. Accordingly, the main beam 210 functions to maintain rigidity of the cowl cross bar 100 and functions as a frame for the cowl cross bar 100.

An upper end of the center support bracket 220 is mounted to the rear surface of the main beam 210. A lower end of the center support bracket 220 is mounted to a bottom panel of the vehicle body. Accordingly, the center support bracket 220 functions to support the main beam 210.

For this function, as shown in FIGs. 9 and 10, the center support bracket 220 includes a main frame 221. A lower end of the main frame 221 is mounted to the bottom panel of the vehicle body while extending in an upward/downward direction. The center support bracket 220 further includes a neck frame 222 integrally formed at an upper portion of the main frame 221 and first and second mounting plates 223 and 224 formed at an upper portion of the neck frame 222 and mounted to the rear surface of the main beam 210 while overlapping therewith. Further, the center support bracket 220 includes the connecting plate 225 mounted to the rear surface of the main beam 210 while overlapping therewith and configured to integrally interconnect the first and second mounting plates 223 and 224.

A molding hole 221-1 for molding a cockpit mounting bracket 330, which is one constituent element of the plastic injection-molded part 300, is formed at one side portion of the neck frame 222, to extend therethrough. A bent portion 222-2, which has a "c"-shaped cross-section while protruding to be convex forwards, is formed at the other side portion of the neck frame 222, for easy removal of an injection mold.

In this case, the bent portion 222-2 not only provides a function for easily removing an injection mold, but also functions to reinforce rigidity of the neck frame 222 in order to prevent deformation of the neck frame 222 caused by collision energy.

The first mounting plate 223 and the second mounting plate 224 are plate structures having curved cross-sections extending upwards while forming two branches extending from one side position (e.g., a first side position) and the other side position (e.g., a second side position) of the neck frame 222, respectively. The first mounting plate 223 and the second mounting plate 224 are mounted to the rear surface of the main beam 210 through welding or the like while overlapping therewith. In addition, the connecting plate 225 integrally interconnecting the first and second mounting plates 223 and 224 is mounted to the rear surface of the main beam 210 through welding or the like while overlapping therewith.

Since the first mounting plate 223, the second mounting plate 224, and the connecting plate 225 are welded to the rear surface of the main beam 210 while overlapping therewith, it may be possible to reinforce rigidity of the main beam 210 and to prevent deformation of the main beam 210 caused by collision energy by virtue of the first mounting plate 223, the second mounting plate 224, and the connecting plate 225.

In addition, a pair of through holes 226 is formed through the main beam 210 and the second mounting plate 224, to extend in a forward/rearward direction. The through holes 226 are not only used as spaces for molding of a vehicle body mounting bracket 320, which is one constituent element of the plastic injection-molded part 300, but also provide a function for easily removing an injection mold.

The steel insert 200 having the above-described configuration is inserted into a cavity of an injection mold and is then subjected to an injection molding process in which a plastic material is injected into the cavity of the injection mold. As a result, the steel insert plastic cowl cross bar 100, which has a complex structure of the steel insert 200 and the plastic injection-molded part 300, may be fabricated.

As shown in FIGs. 11 and 12, the plastic injection-molded part 300, which is injection-molded on the steel insert 200, includes a main injection-molded part 310 molded on surfaces of the main beam 210, the first and second mounting plates 223 and 224, the connecting plate 225, etc. of the steel insert 200 while overlapping therewith. The plastic injection-molded part 300 further includes the vehicle body mounting bracket 320, which is molded on the surfaces of the main beam 210 and the second mounting bracket 224 while overlapping therewith, to protrude forwards, while sealing the through holes 226 formed at the main beam 210 and the second mounting plate 224. Additionally, the plastic injection-molded part 300 includes the cockpit mounting bracket 330, which is molded to protrude rearwards while sealing a molding hole 222-1 of the neck frame 222.

The main injection-molded part 310 is injection-molded on surfaces of the main beam 210, the first and second mounting plates 223 and 224, the connecting plate 225, etc. while overlapping therewith. As such, the main injection-molded part functions as a frame for the cowl cross bar 100, together with the main beam 210.

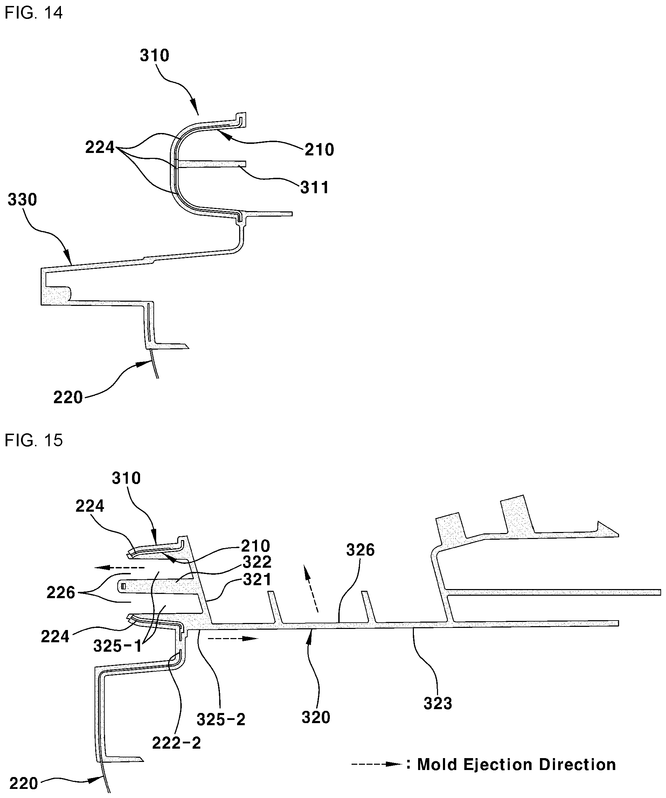

For this function, as shown in FIGs. 13 and 14, the main injection-molded part 310 includes a horizontal plate-shaped protector 311 not only molded on the rear surface of the main beam 210 and the surfaces of the first and second mounting plates 223 and 224 and the connecting plate 225 while overlapping therewith, but also molded on the front surface of the main beam 210, to protrude forwards, thereby protecting the main beam 210 from collision energy.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 and the connecting plate 225 overlap with the main beam 210 and, as such, rigidity of the main beam 210 is reinforced. As a result, it may be possible to prevent tearing or deformation of the cockpit mounting bracket 330 and an area therearound.

A front end of the vehicle body mounting bracket 320 is mounted to a predetermined position of the vehicle body. As such, the vehicle body mounting bracket not only functions to support the cowl cross bar 100, but also functions to primarily buffer collision energy caused by a collision.

For these functions, as shown in FIG.15, the vehicle body mounting bracket 320 includes a reinforcing plate 321 formed at a front end of the main beam 210, to extend at an incline, while sealing the through holes 226 formed at the main beam 210 and the second mounting plate 224. Additionally, the vehicle body mounting bracket 320 includes a reinforcing rib 322 connected to the front surface of the main beam 210 between the through holes 226 while extending rearwards from a rear surface of the reinforcing plate 321, and a vehicle body mounting plate 323 assembled or coupled to a predetermined position of the vehicle body while extending forwards from a lower portion of the reinforcing plate 321.

In this case, the reinforcing plate 321 and the reinforcing rib 322 of the vehicle body mounting bracket 320 are integrally connected to the main beam 210 of the steel insert 200 through injection molding. Accordingly, rigidity reinforcement of the vehicle body mounting bracket 320 may be achieved, and the vehicle body mounting bracket 320 may be maintained in a forwardly protruding state.

In addition, as shown in FIG. 49, a fracture inducing notch 324 may be further formed at a neck portion of the vehicle body mounting bracket 320. Accordingly, the vehicle body mounting bracket 320 may primarily buffer collision energy caused by a collision and may be fractured at the fracture inducing notch 324 when collision energy is equal to or higher than a predetermined level. Thus, it may be possible to minimize transfer of collision energy to the main beam 210 of the steel insert 200 and the main injection-molded part 310.

Among the constituent elements of the cockpit module, the cockpit mounting bracket 330 functions to provide a mounting surface for elements disposed behind the cowl cross bar 100.

For this function, as shown in FIG. 14, the cockpit mounting bracket 330 is formed to have a shape protruding rearwards while sealing the molding hole 222-1 formed at one side portion of the neck frame 222.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 and the connecting plate 225 overlap with the main beam 210 surrounded by the main injection-molded part 310, thereby reinforcing rigidity, as shown in FIGs. 12, 14, and 16. As a result, it may be possible to prevent tearing or deformation of the cockpit mounting bracket 330, which protrudes rearwards while sealing the molding hole 222-1, and an area around the cockpit mounting bracket 330.

In some examples, as shown in FIG. 12, another cockpit mounting bracket 330-1 may be further injection-molded on the main beam 210 at a position beyond the neck frame 222 of the center support bracket 220 such that the cockpit mounting bracket 330-1 protrudes rearwards. The cockpit mounting bracket 330-1 functions to provide a mounting surface for other constituent elements of the cockpit module.

Referring to FIG. 15, forward/rearward mold ejection spaces 325-1 for removal of an injection mold are formed over and beneath the reinforcing rib 322 of the vehicle body mounting bracket 320, respectively, by virtue of the through holes 226. A forward/rearward mold ejection space 325-2 for removal of an injection mold in a forward/rearward direction is formed beneath the vehicle body mounting plate 323 of the vehicle body mounting bracket 320. In addition, an upward/downward mold ejection space 326 for removal of an injection mold in an upward/downward direction is formed over the vehicle body mounting plate 323.

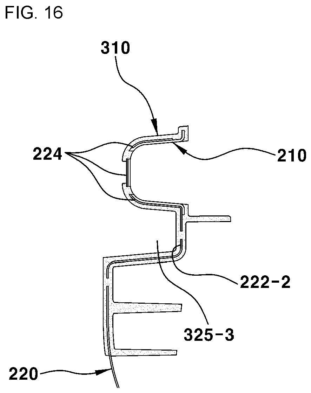

Referring to FIG. 16, a forward/rearward mold ejection space 325-3 is also formed at the plastic injection-molded part surrounding the bent portion 222-2 of the neck frame 222, by virtue of the bent portion 222-2.

Accordingly, easy removal of a mold after execution of an injection molding process may be achieved by virtue of the forward/rearward mold ejection spaces 325-1, 325-2, and 325-3, the upward/downward mold ejection space 326, etc.

Meanwhile, the steering lower mounting bracket 230, which functions to support a lower portion of a steering column or the like, is integrally connected to a predetermined position of the front surface of the main beam 210 of the steel insert 200 while protruding forwards.

Referring to FIG. 50, the steering lower mounting bracket 230 of the steel insert 200 is integrally connected to the main beam 210 by a steel bar 231 having a predetermined length.

Accordingly, when collision energy is applied to the steering lower mounting bracket 230, the steel bar 231 buffers the collision energy while being deformed. As a result, the steering column or the like mounted to the steering lower mounting bracket 230 may be prevented from moving substantially from an original position thereof, and penetration of the steering column or the like into the vehicle interior may be minimized.

The steering lower mounting bracket 230 of the steel insert 200 is also injection-molded using a plastic material. As such, the plastic injection-molded part 300 is configured through further inclusion of a plastic injection-molded bracket 340 molded on the steel bar 231 and the steering lower mounting bracket 230.

In some examples, as shown in FIG. 50, a plurality of deformation inducing holes 232 are formed at an upper plate portion of the steering lower mounting bracket 230, to induce deformation of the steering lower mounting bracket 230 when the steering lower mounting bracket 230 absorbs collision energy.

Referring to FIGs. 51 and 52, the plastic injection-molded bracket 340 may include a first injection-molded bracket portion 341 molded to surround the steel bar 231, and a second injection-molded bracket portion 342 molded to overlap with an upper surface, opposite side surfaces, and a lower surface of the steering lower mounting bracket 230.

In addition, as shown in FIG. 51, a step 343 for induction of bending and fracture is formed at a boundary between upper surfaces of the first and second injection-molded bracket portions 341 and 342.

In this case, a floating nut 234 is welded to the steering lower mounting bracket 230, to be bolted to the vehicle body. In some examples, the floating nut 234 may be welded to the steering lower mounting bracket 230 before injection molding of the plastic injection-molded part. This is because it is difficult to mold the floating nut through plastic insert injection molding.

Accordingly, when collision energy caused by forward collision is applied to the steering lower mounting bracket 230, the deformation inducing hole 232 absorbs initial collision energy while being deformed, and deformation of the steering lower mounting bracket 230 such as bending and/or fracture may be induced by the step 343 formed at the boundary between the first and second injection-molded bracket portions 341 and 342. In addition, the steel bar 231 is also deformed, thereby further buffering the collision energy. As a result, the steering column or the like mounted to the steering lower mounting bracket 230 may be prevented from moving substantially from an original position thereof, and penetration of the steering column or the like into the vehicle interior may be minimized. Thus, deformation of the cowl cross bar may be minimized, and injury of a passenger seated in the vehicle interior caused by the cowl cross bar may be prevented.

### Third Embodiment

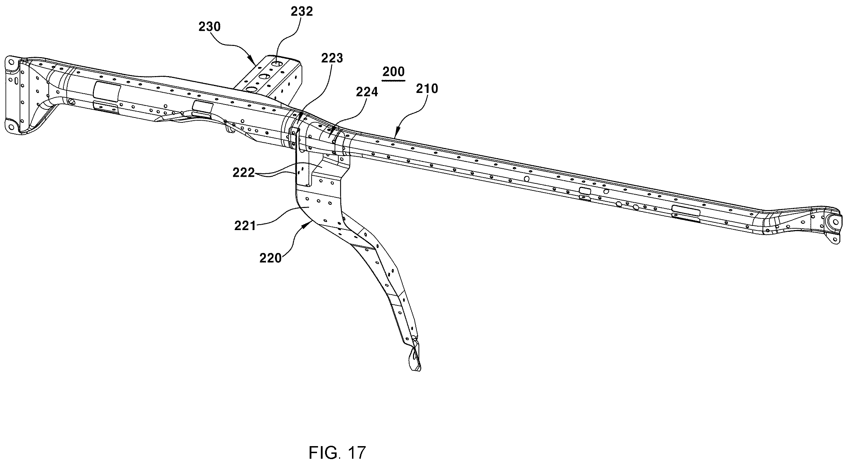

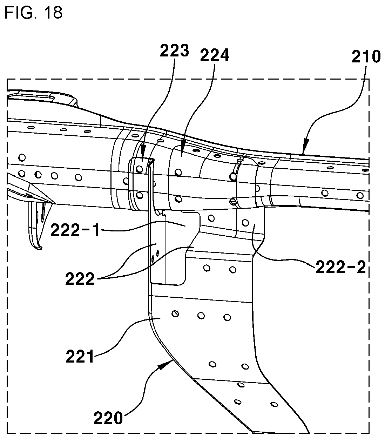

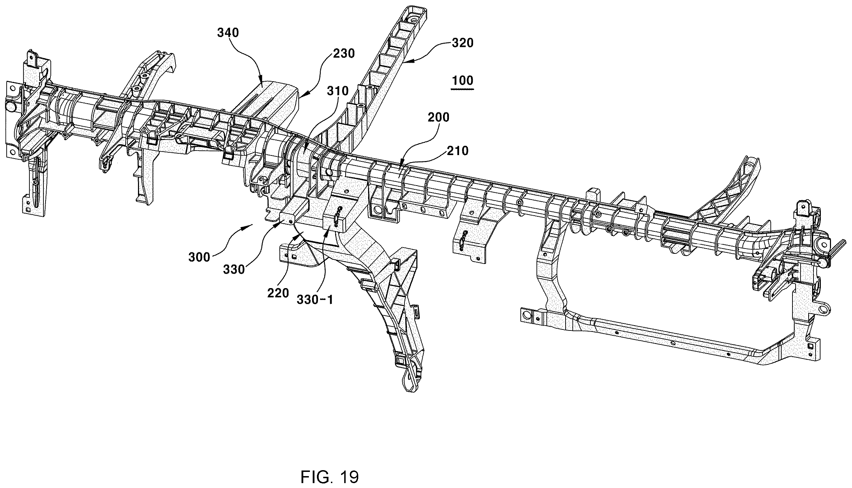

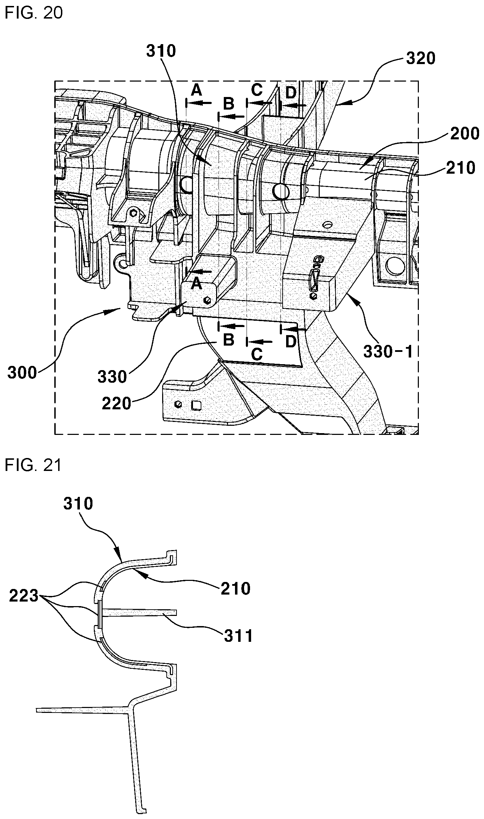

FIGs. 17 and 18 are perspective views showing a steel insert of a cowl cross bar according to a third embodiment of the present disclosure. FIGs. 19 and 20 are perspective views showing a steel insert plastic cowl cross bar according to the third embodiment of the present disclosure.

The steel insert plastic cowl cross bar according to the third embodiment of the present disclosure, which is designated by reference numeral "100", is fabricated by injecting a plastic material into a cavity of an injection mold under a predetermined pressure in a state in which a steel insert is inserted or disposed in the cavity of the injection mold. Accordingly, the steel insert plastic cowl cross bar has a complex structure of a steel insert 200 and a plastic injection-molded part 300.

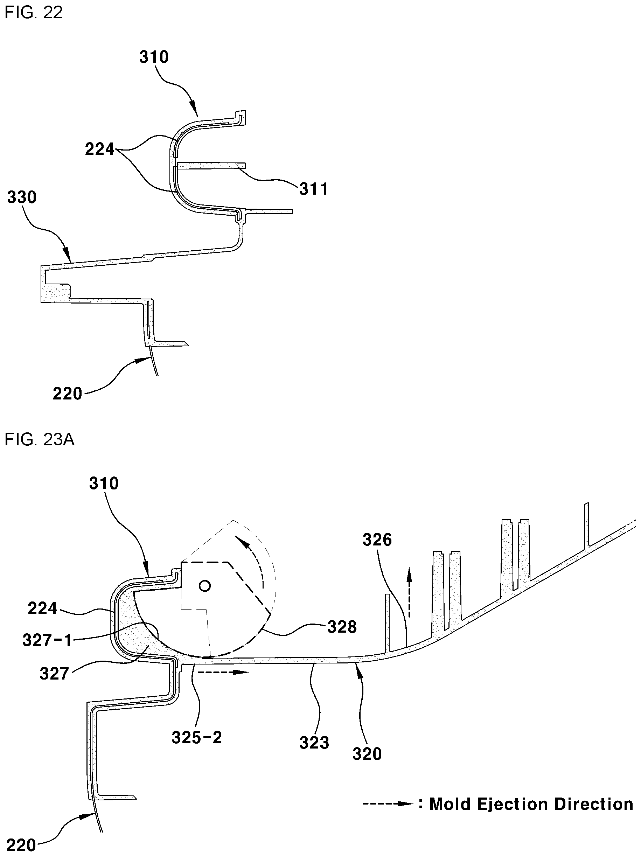

As shown in FIG. 23A, the steel insert plastic cowl cross bar according to the third embodiment of the present disclosure is characterized in that the steel insert plastic cowl cross bar is fabricated to have a structure capable of allowing a core mold for plastic coring to be easily removed, through rotation, from a fillet-formed portion of a vehicle body mounting bracket 320 included in a plastic injection-molded part 300.

In others, in the case in which, among a plurality of molds for injection-molding the steel insert plastic cowl cross bar, a core mold for plastic coring is configured not to perform linear motion, but to perform rotation, the steel insert plastic cowl cross bar is characterized in that the steel insert plastic cowl cross bar is fabricated to have a structure capable of allowing the core mold for plastic coring to be easily removed, through rotation, from a portion of a plastic injection-molded part 300 at which the vehicle body mounting bracket 320 is formed.

As shown in FIG. 17, the steel insert 200 includes a main beam 210 fabricated to have a C-shaped cross-sectional structure opened forwards, a center support bracket 220 connected to a predetermined position of a rear surface of the main beam 210 while extending downwards, and a steering lower mounting bracket 230 connected to a predetermined position of a front surface of the main beam 210 while protruding forwards.

The main beam 210 is disposed in front of a driver seat and a passenger seat, to extend in a left/right direction, in other words, a lateral direction, and is fixed, at opposite ends thereof, to left and right panels of a vehicle body. Accordingly, the main beam 210 functions to maintain rigidity of the cowl cross bar 100 and functions as a frame for the cowl cross bar 100.

An upper end of the center support bracket 220 is mounted to the rear surface of the main beam 210. A lower end of the center support bracket 220 is mounted to a bottom panel of the vehicle body. Accordingly, the center support bracket 220 functions to support the main beam 210.

For this function, as shown in FIGs. 17 and 18, the center support bracket 220 includes a main frame 221. A lower end of the main frame 221 is mounted to the bottom panel of the vehicle body while extending in an upward/downward direction. The center support bracket 220 further includes a neck frame 222 integrally formed at an upper portion of the main frame 221 and a first mounting plate 223 and a second mounting plate 224 formed at an upper portion of the neck frame 222 and mounted to the rear surface of the main beam 210 while overlapping therewith.

A molding hole 221-1 for molding of a cockpit mounting bracket 330, which is one constituent element of the plastic injection-molded part 300, is formed at one side portion of the neck frame 222, to extend therethrough. A bent portion 222-2, which has a "c"-shaped cross-section while protruding to be convex forwards, is formed at the other side portion of the neck frame 222, for easy removal of an injection mold.

In this case, the bent portion 222-2 not only provides a function for easily removing an injection mold, but also functions to reinforce rigidity of the neck frame 222 in order to prevent deformation of the neck frame 222 caused by collision energy.

The first mounting plate 223 and the second mounting plate 224 are plate structures having curved cross-sections extending upwards while forming two branches extending from one side position and the other side position of the neck frame 222, respectively. The first mounting plate 223 and the second mounting plate 224 are mounted to the rear surface of the main beam 210 through welding or the like while overlapping therewith.

Since the first mounting plate 223 and the second mounting plate 224 are welded to the rear surface of the main beam 210 while overlapping therewith, it may be possible to reinforce rigidity of the main beam 210 and to prevent deformation of the main beam 210 caused by collision energy by virtue of the first mounting plate 223 and the second mounting plate 224.

The steel insert 200 having the above-described configuration is inserted into a cavity of an injection mold and is then subjected to an injection molding process in which a plastic material is injected into the cavity of the injection mold. As a result, the steel insert plastic cowl cross bar 100, which has a complex structure of the steel insert 200 and the plastic injection-molded part 300, may be fabricated.

As shown in FIGs. 19 and 20, the plastic injection-molded part 300, which is injection-molded on the steel insert 200, includes a main injection-molded part 310 molded on surfaces of the main beam 210 and the first and second mounting plates 223 and 224 of the steel insert 200 while overlapping therewith, the vehicle body mounting bracket 320, which protrudes forwards from the front surface of the main beam 210, and the cockpit mounting bracket 330, which is molded to protrude rearwards while sealing a molding hole 222-1 of the neck frame 222.

The main injection-molded part 310 is injection-molded on surfaces of the main beam 210, the first and second mounting plates 223 and 224, etc. while overlapping therewith and, as such, functions as a frame for the cowl cross bar 100, together with the main beam 210.

For this function, as shown in FIGs. 21 and 22, the main injection-molded part 310 includes a horizontal plate-shaped protector 311 not only molded on the rear surface of the main beam 210 and the surfaces of the first and second mounting plates 223 and 224 while overlapping therewith, but also molded on the front surface of the main beam 210, to protrude forwards, thereby protecting the main beam 210 from collision energy.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 overlap with the main beam 210 and, as such, rigidity of the main beam 210 is reinforced. As a result, it may be possible to prevent tearing or deformation of the cockpit mounting bracket 330 and an area therearound.

A front end of the vehicle body mounting bracket 320 is mounted to a predetermined position of the vehicle body and, as such, not only functions to support the cowl cross bar 100, but also functions to primarily buffer collision energy caused by a collision.

For these functions, as shown in FIG. 23A, the vehicle body mounting bracket 320 includes a reinforcing fillet 327 molded to fill a front surface portion of the main beam 210 (a concave portion formed in accordance with the C-shaped cross-section), and a vehicle body mounting plate 323 assembled or coupled to a predetermined position of the vehicle body while extending forwards from a lower portion of the fillet 327.

In this case, the fillet 327 of the vehicle body mounting bracket 320 is formed for a bending-prevention reinforcing function, induction of core mold ejection, core mold undercut prevention, etc.

In addition, since the fillet 327 of the vehicle body mounting bracket 320 is integrally connected to the main beam 210 of the steel insert 200 through injection molding, rigidity reinforcement of the vehicle body mounting bracket 320 may be achieved, and the vehicle body mounting bracket 320 may be maintained in a state in which it protrudes forward.

In particular, as shown in FIG. 23A, the fillet 327 has a surface formed with a curved coring groove 327-1 in order to allow, from among a plurality of injection molds, a core mold 328 to be easily removed through rotation.

In other words, the surface of the fillet 327 may be formed with the curved coring groove 327-1 through a plastic coring operation of the core mold 328 and, as such, the core mold 328 may be easily removed through rotation.

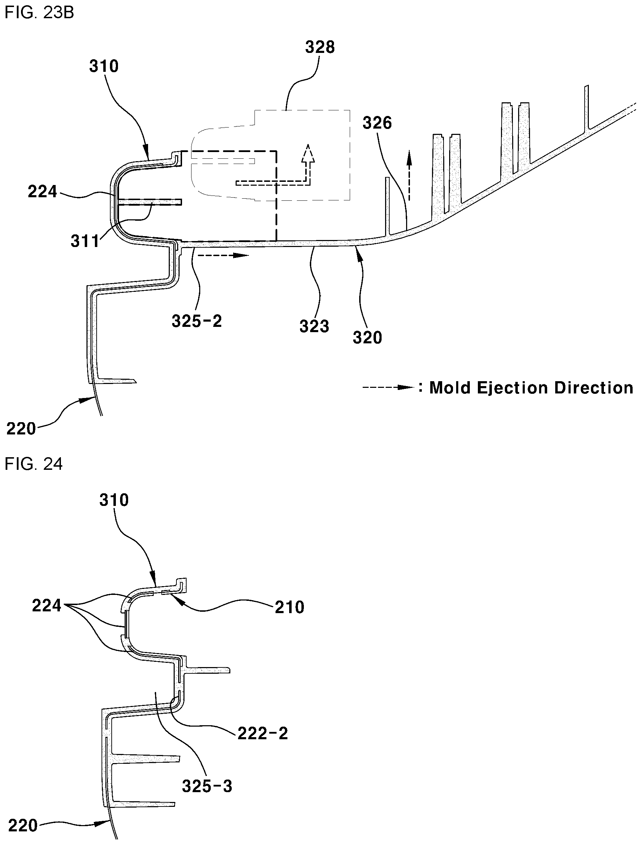

Meanwhile, the fillet 327 may be formed to have a structure with the curved coring groove 327-1 in accordance with the above-described ejection of the core mold 328 through rotation. Alternatively, as shown in FIG. 23B, a horizontal plate-shaped protector 311 having a coring groove may be formed in accordance with removal of the core mold 328 through horizontal movement.

In addition, as shown in FIG. 49, a fracture inducing notch 324 may be further formed at a neck portion of the vehicle body mounting bracket 320. Accordingly, the vehicle body mounting bracket 320 may primarily buffer collision energy caused by a collision and may be fractured at the fracture inducing notch 324 when collision energy is equal to or higher than a predetermined level. Thus, it may be possible to minimize transfer of collision energy to the main beam 210 of the steel insert 200 and the main injection-molded part 310.

Among the constituent elements of the cockpit module, the cockpit mounting bracket 330 functions to provide a mounting surface for elements disposed behind the cowl cross bar 100.

For this function, as shown in FIG. 22, the cockpit mounting bracket 330 is formed to have a shape protruding rearwards while sealing the molding hole 222-1 formed at one side portion of the neck frame 222.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 overlap with the main beam 210 surrounded by the main injection-molded part 310, thereby reinforcing rigidity, as shown in FIGs. 22 and 24. As a result, it may be possible to prevent tearing or deformation of the cockpit mounting bracket 330, which protrudes rearwards while sealing the molding hole 222-1, and an area around the cockpit mounting bracket 330.

In some examples, as shown in FIG. 20, another cockpit mounting bracket 330-1 may be further injection-molded on the main beam 210 at a position beyond the neck frame 222 of the center support bracket 220 such that the cockpit mounting bracket 330-1 protrudes rearwards. The cockpit mounting bracket 330-1 functions to provide a mounting surface for other constituent elements of the cockpit module.

Referring to FIGs. 23A and 23B, a forward/rearward mold ejection space 325-2 for removal of an injection mold in a forward/rearward direction is formed beneath the vehicle body mounting plate 323 of the vehicle body mounting bracket 320. In addition, an upward/downward mold ejection space 326 for removal of an injection mold in an upward/downward direction is formed over the vehicle body mounting plate 323.

Referring to FIG. 24, a forward/rearward mold ejection space 325-3 is also formed at the plastic injection-molded part surrounding the bent portion 222-2 of the neck frame 222, by virtue of the bent portion 222-2.

Accordingly, easy removal of a mold after execution of an injection molding process may be achieved by virtue of the forward/rearward mold ejection spaces 325-2 and 325-3, the upward/downward mold ejection space 326, etc. The curved coring groove 327-1 may be subsequently formed at the surface of the fillet 327 in accordance with a plastic coring operation of the core mold 328.

Meanwhile, the steering lower mounting bracket 230, which functions to support a lower portion of a steering column or the like, is integrally connected to a predetermined position of the front surface of the main beam 210 of the steel insert 200 while protruding forwards.

Referring to FIG. 50, the steering lower mounting bracket 230 of the steel insert 200 is integrally connected to the main beam 210 by a steel bar 231 having a predetermined length.

Accordingly, when collision energy is applied to the steering lower mounting bracket 230, the steel bar 231 buffers the collision energy while being deformed. As a result, the steering column or the like mounted to the steering lower mounting bracket 230 may be prevented from moving substantially from an original position thereof, and penetration of the steering column or the like into the vehicle interior may be minimized.

The steering lower mounting bracket 230 of the steel insert 200 is also injection-molded using a plastic material. As such, the plastic injection-molded part 300 includes a plastic injection-molded bracket 340 molded on the steel bar 231 and the steering lower mounting bracket 230.

In some examples, as shown in FIG. 50, a plurality of deformation inducing holes 232 are formed at an upper plate portion of the steering lower mounting bracket 230, to induce deformation of the steering lower mounting bracket 230 when the steering lower mounting bracket 230 absorbs collision energy.

Referring to FIGs. 51 and 52, the plastic injection-molded bracket 340 may be constituted by a first injection-molded bracket portion 341 molded to surround the steel bar 231, and a second injection-molded bracket portion 342 molded to overlap with an upper surface, opposite side surfaces, and a lower surface of the steering lower mounting bracket 230.

In addition, as shown in FIG. 51, a step 343 for induction of bending and fracture is formed at a boundary between upper surfaces of the first and second injection-molded bracket portions 341 and 342.

In this case, a floating nut 234 is previously welded to the steering lower mounting bracket 230, to be bolted to the vehicle body. This is because it is difficult to mold the floating nut through plastic insert injection molding.

Accordingly, when collision energy caused by forward collision is applied to the steering lower mounting bracket 230, the deformation inducing hole 232 absorbs initial collision energy while being deformed, and deformation of the steering lower mounting bracket 230 such as bending and/or fracture may be induced by the step 343 formed at the boundary between the first and second injection-molded bracket portions 341 and 342. In addition, the steel bar 231 is also deformed, thereby further buffering the collision energy. As a result, the steering column or the like mounted to the steering lower mounting bracket 230 may be prevented from moving substantially from an original position thereof, and penetration of the steering column or the like into the vehicle interior may be minimized. Thus, deformation of the cowl cross bar may be minimized, and injury of a passenger seated in the vehicle interior caused by the cowl cross bar may be prevented.

### Fourth Embodiment

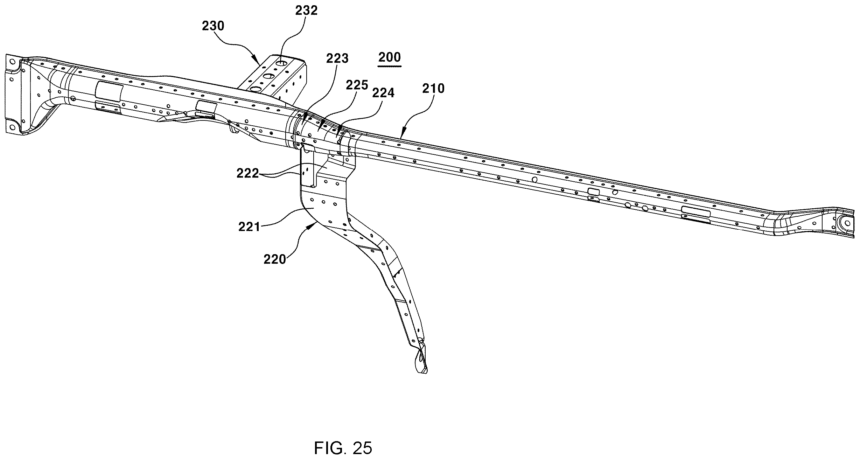

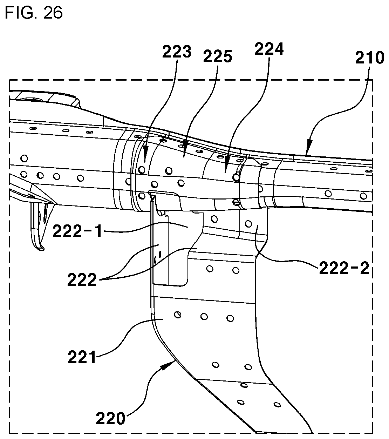

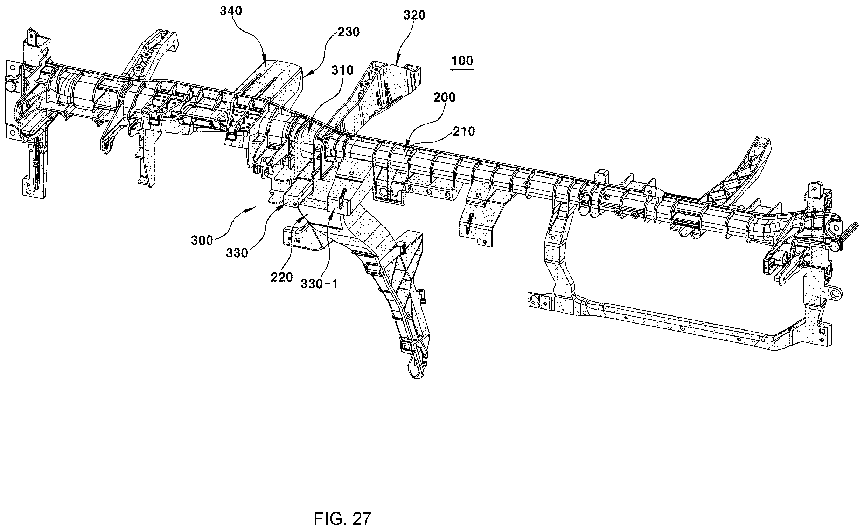

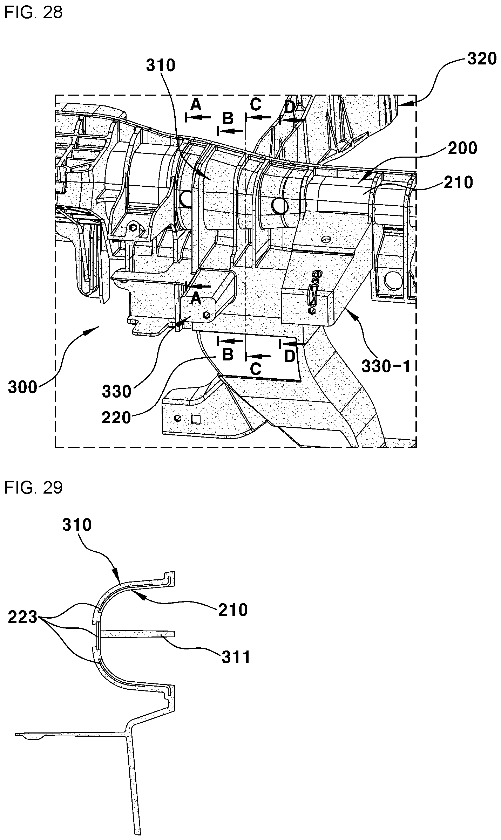

FIGs. 25 and 26 are perspective views showing a steel insert of a cowl cross bar according to a fourth embodiment of the present disclosure. FIGs. 27 and 28 are perspective views showing a steel insert plastic cowl cross bar according to the fourth embodiment of the present disclosure.

The steel insert plastic cowl cross bar according to the fourth embodiment of the present disclosure is characterized in that the steel insert plastic cowl cross bar is fabricated to have a structure capable of allowing a core mold for plastic coring to be easily removed through rotation, as described with reference to the third embodiment. Additionally, the steel insert plastic cowl cross bar is configured such that a center support bracket 220 thereof further includes a connecting plate 225 mounted to a main beam 210 of a steel insert 200 while overlapping therewith and configured to integrally interconnect first and second mounting plates 223 and 224, as shown in FIG. 26.

The steel insert plastic cowl cross bar according to the fourth embodiment of the present disclosure, which is designated by reference numeral "100", is fabricated by injecting a plastic material into a cavity of an injection mold under a predetermined pressure in a state in which a steel insert is inserted in the cavity of the injection mold. Accordingly, the steel insert plastic cowl cross bar has a complex structure including a steel insert 200 and a plastic injection-molded part 300.

As shown in FIG. 25, the steel insert 200 includes a main beam 210 fabricated to have a C-shaped cross-sectional structure opened forwards, a center support bracket 220 connected to a predetermined position of a rear surface of the main beam 210 while extending downwards, and a steering lower mounting bracket 230 connected to a predetermined position of a front surface of the main beam 210 while protruding forwards.

The main beam 210 is disposed in front of a driver seat and a passenger seat, to extend in a left/right direction, in other words, a lateral direction, and is fixed, at opposite ends thereof, to left and right panels of a vehicle body. Accordingly, the main beam 210 functions to maintain rigidity of the cowl cross bar 100 and functions as a frame for the cowl cross bar 100.

An upper end of the center support bracket 220 is mounted, to the rear surface of the main beam 210. A lower end of the center support bracket 220 is mounted to a bottom panel of the vehicle body. Accordingly, the center support bracket 220 functions to support the main beam 210.

For this function, as shown in FIGs. 25 and 26, the center support bracket 220 includes a main frame 221. A lower end of the main frame 221 is mounted to the bottom panel of the vehicle body while extending in an upward/downward direction. The center support bracket 220 further includes a neck frame 222 integrally formed at an upper portion of the main frame 221 and first and second mounting plates 223 and 224 formed at an upper portion of the neck frame 222 and mounted to the rear surface of the main beam 210 while overlapping therewith. Additionally, the center support bracket 220 includes the connecting plate 225 mounted to the rear surface of the main beam 210 while overlapping therewith and configured to integrally interconnect the first and second mounting plates 223 and 224.

A molding hole 221-1 for molding of a cockpit mounting bracket 330, which is one constituent element of the plastic injection-molded part 300, is formed at one side portion of the neck frame 222, to extend therethrough. A bent portion 222-2, which has a "c"-shaped cross-section while protruding to be convex forwards, is formed at the other side portion of the neck frame 222, for easy removal of an injection mold.

In this case, the bent portion 222-2 not only provides a function for easily removing an injection mold, but also functions to reinforce rigidity of the neck frame 222 in order to prevent deformation of the neck frame 222 caused by collision energy.

The first mounting plate 223 and the second mounting plate 224 are plate structures having curved cross-sections extending upwards while forming two branches extending from one side position and the other side position of the neck frame 222, respectively. The first mounting plate 223 and the second mounting plate 224 are mounted to the rear surface of the main beam 210 through welding or the like while overlapping therewith. In addition, the connecting plate 225 integrally interconnecting the first and second mounting plates 223 and 224 is mounted to the rear surface of the main beam 210 through welding or the like while overlapping therewith.

Since the first mounting plate 223, the second mounting plate 224, and the connecting plate 225 are welded to the rear surface of the main beam 210 while overlapping therewith, it may be possible to reinforce rigidity of the main beam 210 and to prevent deformation of the main beam 210 caused by collision energy by virtue of the first mounting plate 223, the second mounting plate 224, and the connecting plate 225.

The steel insert 200 having the above-described configuration is inserted into a cavity of an injection mold and is then subjected to an injection molding process in which a plastic material is injected into the cavity of the injection mold. As a result, the steel insert plastic cowl cross bar 100, which has a complex structure including the steel insert 200 and the plastic injection-molded part 300, may be fabricated.

As shown in FIGs. 27 and 28, the plastic injection-molded part 300, which is injection-molded on the steel insert 200, includes a main injection-molded part 310 molded on surfaces of the main beam 210, the first and second mounting plates 223 and 224, the connecting plate 225, etc. of the steel insert 200 while overlapping therewith. The plastic injection-molded part 300 further includes a vehicle body mounting bracket 320 disposed to protrude forwards from the front surface of the main beam 210 and the cockpit mounting bracket 330, which is molded to protrude rearwards while sealing a molding hole 222-1 of the neck frame 222.

The main injection-molded part 310 is injection-molded on surfaces of the main beam 210, the first and second mounting plates 223 and 224, the connecting plate 225, etc. while overlapping therewith and, as such, functions as a frame for the cowl cross bar 100, together with the main beam 210.

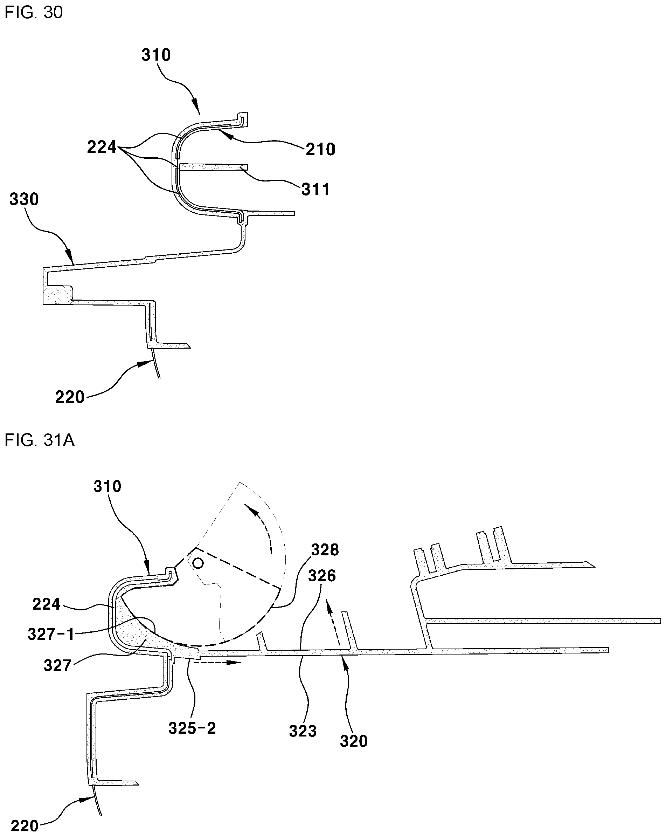

For this function, as shown in FIGs. 29 and 30, the main injection-molded part 310 includes a horizontal plate-shaped protector 311 not only molded on the rear surface of the main beam 210 and the surfaces of the first and second mounting plates 223 and 224 and the connecting plate 225 while overlapping therewith, but also molded on the front surface of the main beam 210, to protrude forwards, thereby protecting the main beam 210 from collision energy.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 and the connecting plate 225 overlap with the main beam 210 and, as such, the main beam 210 is in a rigidity-reinforced state. As a result, it may be possible to prevent tearing or deformation of the cockpit mounting bracket 330 and an area therearound.

The vehicle body mounting bracket 320 is mounted, at a front end thereof, to a predetermined position of the vehicle body and, as such, not only functions to support the cowl cross bar 100, but also functions to primarily buffer collision energy caused by a collision.

For these functions, as shown in FIG. 31A, the vehicle body mounting bracket 320 includes a reinforcing fillet 327 molded to fill a front surface portion of the main beam 210 (a concave portion formed in accordance with the C-shaped cross-section), and a vehicle body mounting plate 323 assembled or coupled to a predetermined position of the vehicle body while extending forwards from a lower portion of the fillet 327.

In this case, the fillet 327 of the vehicle body mounting bracket 320 is formed for a bending-prevention reinforcing function, induction of core mold ejection, core mold undercut prevention, etc.

In addition, since the fillet 327 of the vehicle body mounting bracket 320 is integrally connected to the main beam 210 of the steel insert 200 through injection molding, rigidity reinforcement of the vehicle body mounting bracket 320 may be achieved, and the vehicle body mounting bracket 320 may be maintained in a forwardly protruding state.

In particular, as shown in FIG. 31A, the fillet 327 has a surface formed with a curved coring groove 327-1 in order to allow, from among a plurality of injection molds, a core mold 328 to be easily removed through rotation.

In other words, the surface of the fillet 327 may be formed with the curved coring groove 327-1 through a plastic coring operation of the core mold 328 and, as such, the core mold 328 may be easily removed through rotation.

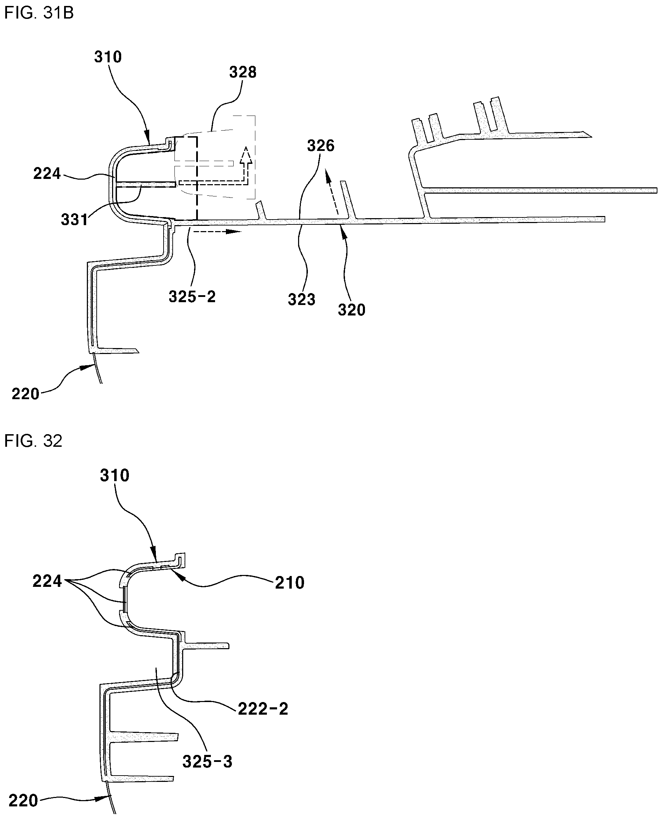

Meanwhile, the fillet 327 may be formed to have a structure with the curved coring groove 327-1 in accordance with the above-described ejection of the core mold 328 through rotation. Alternatively, as shown in FIG. 31B, a horizontal plate-shaped protector 311 having a coring groove may be formed in accordance with removal of the core mold 328 through horizontal movement.

In addition, as shown in FIG. 49, a fracture inducing notch 324 may be further formed at a neck portion of the vehicle body mounting bracket 320. Accordingly, the vehicle body mounting bracket 320 may primarily buffer collision energy caused by a collision and may be fractured at the fracture inducing notch 324 when collision energy is equal to or higher than a predetermined level. Thus, it may be possible to minimize transfer of collision energy to the main beam 210 of the steel insert 200 and the main injection-molded part 310.

Among constituent elements of the cockpit module, the cockpit mounting bracket 330 functions to provide a mounting surface for elements disposed behind the cowl cross bar 100.

For this function, as shown in FIG. 30, the cockpit mounting bracket 330 is formed to have a shape protruding rearwards while sealing the molding hole 222-1 formed at one side portion of the neck frame 222.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 and the connecting plate 225 overlap with the main beam 210 surrounded by the main injection-molded part 310, thereby reinforcing rigidity, as shown in FIGs. 29, 30, and 32. As a result, it may be possible to prevent tearing or deformation of the cockpit mounting bracket 330, which protrudes rearwards while sealing the molding hole 222-1, and an area around the cockpit mounting bracket 330.

In some examples, as shown in FIG. 28, another cockpit mounting bracket 330-1 may be further injection-molded on the main beam 210 at a position beyond the neck frame 222 of the center support bracket 220 such that the cockpit mounting bracket 330-1 protrudes rearwards. The cockpit mounting bracket 330-1 functions to provide a mounting surface for other constituent elements of the cockpit module.

Referring to FIGs. 31A and 31B, a forward/rearward mold ejection space 325-2 for removal of an injection mold in a forward/rearward direction is formed beneath the vehicle body mounting plate 323 of the vehicle body mounting bracket 320. In addition, an upward/downward mold ejection space 326 for removal of an injection mold in an upward/downward direction is formed over the vehicle body mounting plate 323.

Referring to FIG. 32, a forward/rearward mold ejection space 325-3 is also formed at the plastic injection-molded part surrounding the bent portion 222-2 of the neck frame 222, by virtue of the bent portion 222-2.

Accordingly, easy removal of a mold after execution of an injection molding process may be achieved by virtue of the forward/rearward mold ejection spaces 325-2 and 325-3, the upward/downward mold ejection space 326, etc. The curved coring groove 327-1 may be subsequently formed at the surface of the fillet 327 in accordance with a plastic coring operation of the core mold 328.

Meanwhile, the steering lower mounting bracket 230, which functions to support a lower portion of a steering column or the like, is integrally connected to a predetermined position of the front surface of the main beam 210 of the steel insert 200 while protruding forwards.

Referring to FIG. 50, the steering lower mounting bracket 230 of the steel insert 200 is integrally connected to the main beam 210 by a steel bar 231 having a predetermined length.

Accordingly, when collision energy is applied to the steering lower mounting bracket 230, the steel bar 231 buffers the collision energy while being deformed. As a result, the steering column or the like mounted to the steering lower mounting bracket 230 may be prevented from moving substantially from an original position thereof, and penetration thereof into the vehicle interior may be minimized.

The steering lower mounting bracket 230 of the steel insert 200 is also injection-molded using a plastic material and, as such, the plastic injection-molded part 300 includes a plastic injection-molded bracket 340 molded on the steel bar 231 and the steering lower mounting bracket 230.

In some examples, as shown in FIG. 50, a plurality of deformation inducing holes 232 are formed at an upper plate portion of the steering lower mounting bracket 230, to induce deformation of the steering lower mounting bracket 230 when the steering lower mounting bracket 230 absorbs collision energy.

Referring to FIGs. 51 and 52, the plastic injection-molded bracket 340 may be constituted by a first injection-molded bracket portion 341 molded to surround the steel bar 231, and a second injection-molded bracket portion 342 molded to overlap with an upper surface, opposite side surfaces, and a lower surface of the steering lower mounting bracket 230.

In addition, as shown in FIG. 51, a step 343 for induction of bending and fracture is formed at a boundary between upper surfaces of the first and second injection-molded bracket portions 341 and 342.

In this case, a floating nut 234 is welded to the steering lower mounting bracket 230, to be bolted to the vehicle body. In some examples, the floating nut 234 is welded to the steering lower mounting bracket 230 before injection molding of the plastic injection-molded part. This is because it is difficult to mold the floating nut through plastic insert injection molding.

Accordingly, when collision energy caused by forward collision is applied to the steering lower mounting bracket 230, the deformation inducing hole 232 absorbs initial collision energy while being deformed, and deformation of the steering lower mounting bracket 230 such as bending and/or fracture may be induced by the step 343 formed at the boundary between the first and second injection-molded bracket portions 341 and 342. In addition, the steel bar 231 is also deformed, thereby further buffering the collision energy. As a result, the steering column or the like mounted to the steering lower mounting bracket 230 may be prevented from moving substantially from an original position thereof, and penetration of the steering column or the like into the vehicle interior may be minimized. Thus, deformation of the cowl cross bar may be minimized, and injury of a passenger seated in the vehicle interior caused by the cowl cross bar may be prevented.

### Fifth Embodiment

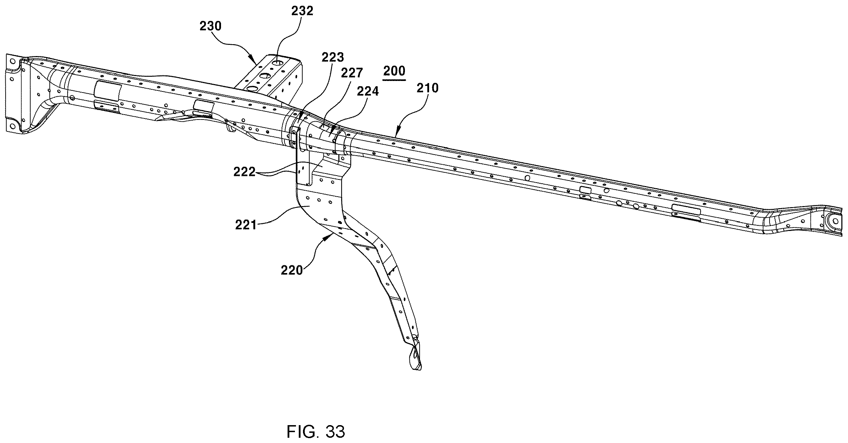

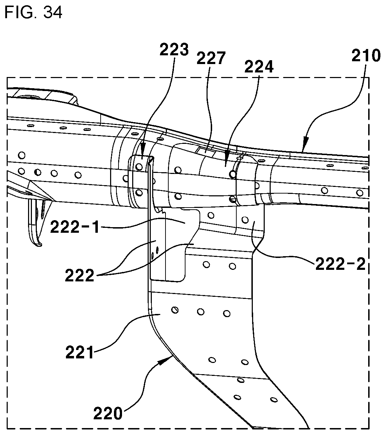

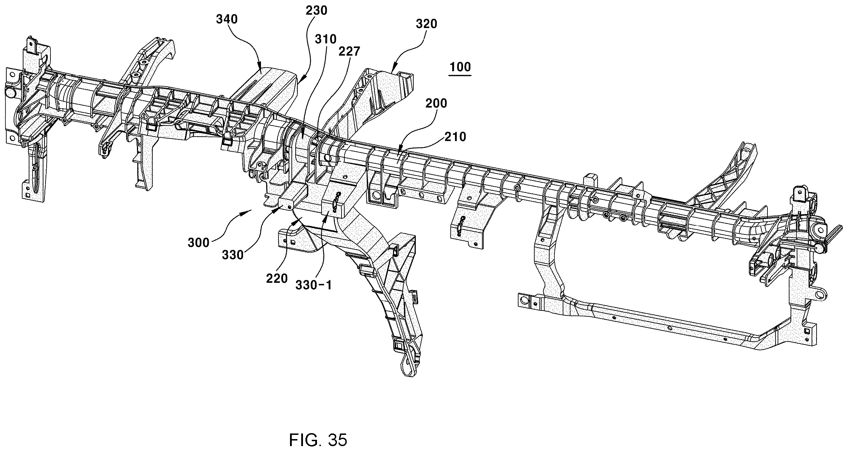

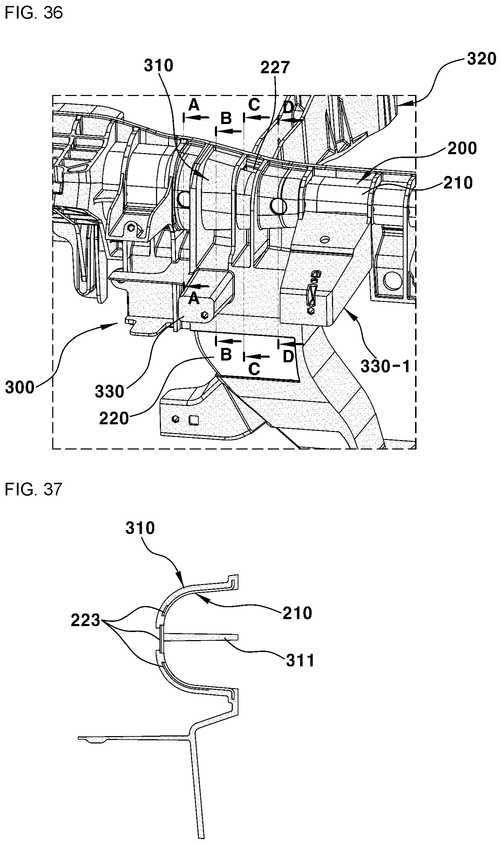

FIGs. 33 and 34 are perspective views showing a steel insert of a cowl cross bar according to a fifth embodiment of the present disclosure. FIGs. 35 and 36 are perspective views showing a steel insert plastic cowl cross bar according to the fifth embodiment of the present disclosure.

The steel insert plastic cowl cross bar according to the fifth embodiment of the present disclosure, which is designated by reference numeral "100", is fabricated by injecting a plastic material into a cavity of an injection mold under a predetermined pressure in a state in which a steel insert is inserted or disposed in the cavity of the injection mold, such that the steel insert plastic cowl cross bar has a complex structure including a steel insert 200 and a plastic injection-molded part 300.

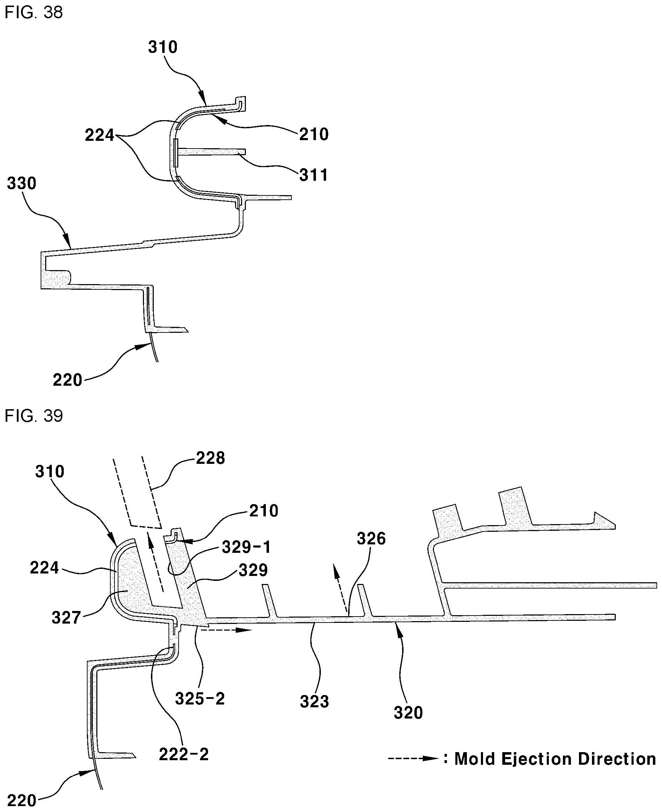

As shown in FIG. 39, the steel insert plastic cowl cross bar according to the fifth embodiment of the present disclosure is characterized in that the steel insert plastic cowl cross bar is fabricated to have a structure in which an impact absorption plate 329 is formed at a vehicle body mounting bracket 320 included in a plastic injection-molded part 300, through plastic coring.

As shown in FIG. 33, the steel insert 200 includes a main beam 210 fabricated to have a C-shaped cross-sectional structure opened forwards, a center support bracket 220 connected to a predetermined position of a rear surface of the main beam 210 while extending downwards, and a steering lower mounting bracket 230 connected to a predetermined position of a front surface of the main beam 210 while protruding forwards.

The main beam 210 is disposed in front of a driver seat and a passenger seat, to extend in a left/right direction, in other words, a lateral direction, and is fixed, at opposite ends thereof, to left and right panels of a vehicle body. Accordingly, the main beam 210 functions to maintain rigidity of the cowl cross bar 100 and functions as a frame for the cowl cross bar 100.

An upper end of the center support bracket 220 is mounted to the rear surface of the main beam 210. A lower end of the center support bracket 220 is mounted to a bottom panel of the vehicle body. Accordingly, the center support bracket 220 functions to support the main beam 210.

For this function, as shown in FIGs. 33 and 34, the center support bracket 220 includes a main frame 221. A lower end of the main frame 221 is mounted to the bottom panel of the vehicle body while extending in an upward/downward direction. The center support bracket 220 further includes a neck frame 222 integrally formed at an upper portion of the main frame 221 and a first mounting plate 223 and a second mounting plate 224 formed at an upper portion of the neck frame 222 and mounted to the rear surface of the main beam 210 while overlapping therewith.

A molding hole 221-1 for molding of a cockpit mounting bracket 330, which is one constituent element of the plastic injection-molded part 300, is formed at one side portion of the neck frame 222, to extend therethrough. A bent portion 222-2, which has a "c"-shaped cross-section while protruding to be convex forwards, is formed at the other side portion of the neck frame 222, for easy removal of an injection mold.

In this case, the bent portion 222-2 not only provides a function for easily removing an injection mold, but also functions to reinforce rigidity of the neck frame 222 in order to prevent deformation of the neck frame 222 caused by collision energy.

The first mounting plate 223 and the second mounting plate 224 are plate structures having curved cross-sections extending upwards while forming two branches extending from one side position and the other side position of the neck frame 222, respectively. The first mounting plate 223 and the second mounting plate 224 are mounted to the rear surface of the main beam 210 through welding or the like while overlapping therewith.

Since the first mounting plate 223 and the second mounting plate 224 are welded to the rear surface of the main beam 210 while overlapping therewith, it may be possible to reinforce rigidity of the main beam 210 and to prevent deformation of the main beam 210 caused by collision energy by virtue of the first mounting plate 223 and the second mounting plate 224.

In particular, a coring hole 227 for mold removal and impact absorption is formed at the main beam 210 and the second mounting plate 224, to extend therethrough in an upward/downward direction. The coring hole 227 is used for plastic coring in order to enable formation of the impact absorption plate 329 at the vehicle body mounting bracket 320 included in the plastic injection-molded part 300.

The steel insert 200 having the above-described configuration is inserted into a cavity of an injection mold and is then subjected to an injection molding process in which a plastic material is injected into the cavity of the injection mold. As a result, the steel insert plastic cowl cross bar 100, which has a complex structure including the steel insert 200 and the plastic injection-molded part 300, may be fabricated.

As shown in FIGs. 35 and 36, the plastic injection-molded part 300, which is injection-molded on the steel insert 200, includes a main injection-molded part 310 molded on surfaces of the main beam 210 and the first and second mounting plates 223 and 224 of the steel insert 200 while overlapping therewith. The injection-molded part 300 further includes the vehicle body mounting bracket 320, which protrudes forwards from the front surface of the main beam 210 and the cockpit mounting bracket 330, which is molded to protrude rearwards while sealing a molding hole 222-1 of the neck frame 222.

The main injection-molded part 310 is injection-molded on surfaces of the main beam 210, the first and second mounting plates 223 and 224, etc. while overlapping therewith and, as such, functions as a frame for the cowl cross bar 100, together with the main beam 210.

For this function, as shown in FIGs. 37 and 38, the main injection-molded part 310 includes a horizontal plate-shaped protector 311 not only molded on the rear surface of the main beam 210 and the surfaces of the first and second mounting plates 223 and 224 while overlapping therewith, but also molded on the front surface of the main beam 210, to protrude forwards, thereby protecting the main beam 210 from collision energy.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 overlap with the main beam 210 and, as such, rigidity of the main beam 210 is reinforced. As a result, it may be possible to prevent tearing or deformation of the cockpit mounting bracket 330 and an area therearound.

A front end of the vehicle body mounting bracket 320 is mounted to a predetermined position of the vehicle body. As such, the vehicle body mounting bracket 320 not only functions to support the cowl cross bar 100, but also functions to primarily buffer collision energy caused by a collision.

As described above, the coring hole 227 is formed at the main beam 210 and the second mounting plate 224 and extends through the main beam 210 and the second mounting plate 224 in an upward/downward direction. The coring hole 227 is used for plastic coring in order to enable formation of the impact absorption plate 329 at the vehicle body mounting bracket 320 included in the plastic injection-molded part 300.

For formation of the coring hole 227, as shown in FIG. 39, the vehicle body mounting bracket 320 includes a reinforcing fillet 327 molded to fill a front surface portion of the main beam 210 (a concave portion formed in accordance with the C-shaped cross-section), the impact absorption plate 329, which is integrally connected to a lower end of the fillet 327, and a vehicle body mounting plate 323 assembled or coupled to a predetermined position of the vehicle body while extending forwards from a lower end of the fillet 327.

In this case, a plastic coring groove 329-1 is formed between the fillet 327 and the impact absorption plate 329, as shown in FIG. 39. As shown in FIG. 39, the plastic coring groove 329-1 may be formed as a mold 228 for plastic coring is removed upwards through the coring hole 227 formed at the main beam 210 and the second mounting plate 224.

Since the fillet 327 of the vehicle body mounting bracket 320 is integrally connected to the main beam 210 of the steel insert 200 through injection molding, reinforcement of the rigidity of the vehicle body mounting bracket 320 may be achieved and the vehicle body mounting bracket 320 may be maintained in a forwardly protruding state.

In addition, the impact absorption plate 329 and the coring groove 329-1 of the vehicle body mounting bracket 320 function to absorb collision energy caused by forward collision and, as such, may attenuate collision energy transferred to the main beam 210 and the main injection-molded part 310. As a result, it may be possible to prevent deformation and breakage of the cowl cross bar 100.

In addition, as shown in FIG. 49, a fracture inducing notch 324 may be further formed at a neck portion of the vehicle body mounting bracket 320. Accordingly, the vehicle body mounting bracket 320 may primarily buffer collision energy caused by a collision and may be fractured at the fracture inducing notch 324 when collision energy is equal to or higher than a predetermined level. Thus, it may be possible to minimize transfer of collision energy to the main beam 210 of the steel insert 200 and the main injection-molded part 310.

Among the constituent elements of the cockpit module, the cockpit mounting bracket 330 functions to provide a mounting surface for elements disposed behind the cowl cross bar 100.

For this function, as shown in FIG. 36, the cockpit mounting bracket 330 is formed to have a shape protruding rearwards while sealing the molding hole 222-1 formed at one side portion of the neck frame 222.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 overlap with the main beam 210 surrounded by the main injection-molded part 310, thereby reinforcing rigidity, as shown in FIGs. 37, 38, and 40. As a result, it may be possible to prevent tearing or deformation of the cockpit mounting bracket 330, which protrudes rearwards while sealing the molding hole 222-1, and an area around the cockpit mounting bracket 330.

In some examples, as shown in FIG. 36, another cockpit mounting bracket 330-1 may be further injection-molded on the main beam 210 at a position beyond the neck frame 222 of the center support bracket 220 such that the cockpit mounting bracket 330-1 protrudes rearwards. The cockpit mounting bracket 330-1 functions to provide a mounting surface for other constituent elements of the cockpit module.

Referring to FIG. 39, a forward/rearward mold ejection space 325-2 for removal of an injection mold in a forward/rearward direction is formed beneath the vehicle body mounting plate 323 of the vehicle body mounting bracket 320. In addition, an upward/downward mold ejection space 326 for removal of an injection mold in an upward/downward direction is formed over the vehicle body mounting plate 323.

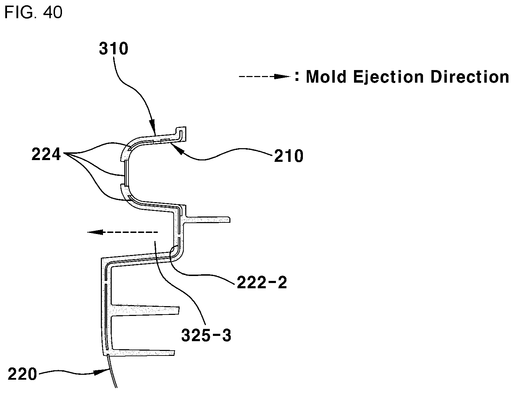

Referring to FIG. 40, a forward/rearward mold ejection space 325-3 is also formed at the plastic injection-molded part surrounding the bent portion 222-2 of the neck frame 222, by virtue of the bent portion 222-2.

Accordingly, easy removal of a mold after execution of an injection molding process may be achieved by virtue of the forward/rearward mold ejection spaces 325-2 and 325-3, the upward/downward mold ejection space 326, etc.

Meanwhile, the steering lower mounting bracket 230, which functions to support a lower portion of a steering column or the like, is integrally connected to a predetermined position of the front surface of the main beam 210 of the steel insert 200 while protruding forwards.

Referring to FIG. 50, the steering lower mounting bracket 230 of the steel insert 200 is integrally connected to the main beam 210 by a steel bar 231 having a predetermined length.

Accordingly, when collision energy is applied to the steering lower mounting bracket 230, the steel bar 231 buffers the collision energy while being deformed. As a result, the steering column or the like mounted to the steering lower mounting bracket 230 may be prevented from moving substantially from an original position thereof, and penetration of the steering column or the like into the vehicle interior may be minimized.

The steering lower mounting bracket 230 of the steel insert 200 is also injection-molded using a plastic material. As such, the plastic injection-molded part 300 further includes a plastic injection-molded bracket 340 molded on the steel bar 231 and the steering lower mounting bracket 230.

In some examples, as shown in FIG. 50, a plurality of deformation inducing holes 232 is formed at an upper plate portion of the steering lower mounting bracket 230, to induce deformation of the steering lower mounting bracket 230 when the steering lower mounting bracket 230 absorbs collision energy.

Referring to FIGs. 51 and 52, the plastic injection-molded bracket 340 may include a first injection-molded bracket portion 341 molded to surround the steel bar 231, and a second injection-molded bracket portion 342 molded to overlap with an upper surface, opposite side surfaces, and a lower surface of the steering lower mounting bracket 230.

In addition, as shown in FIG. 51, a step 343 for induction of bending and fracture is formed at a boundary between upper surfaces of the first and second injection-molded bracket portions 341 and 342.

In this case, a floating nut 234 is welded to the steering lower mounting bracket 230, to be bolted to the vehicle body. In some examples, the floating nut 234 may be welded to the steering lower mounting bracket 230 before the plastic injection-molded part 300 is injection molded. This is because it is difficult to mold the floating nut through plastic insert injection molding.

Accordingly, when collision energy caused by forward collision is applied to the steering lower mounting bracket 230, the deformation inducing hole 232 absorbs initial collision energy while being deformed, and deformation of the steering lower mounting bracket 230 such as bending and/or fracture may be induced by the step 343 formed at the boundary between the first and second injection-molded bracket portions 341 and 342. In addition, the steel bar 231 is also deformed, thereby further buffering the collision energy. As a result, the steering column or the like mounted to the steering lower mounting bracket 230 may be prevented from moving substantially from an original position thereof, and penetration of the steering column or the like into the vehicle interior may be minimized. Thus, deformation of the cowl cross bar may be minimized, and injury of a passenger seated in the vehicle interior caused by the cowl cross bar may be prevented.

### Sixth Embodiment

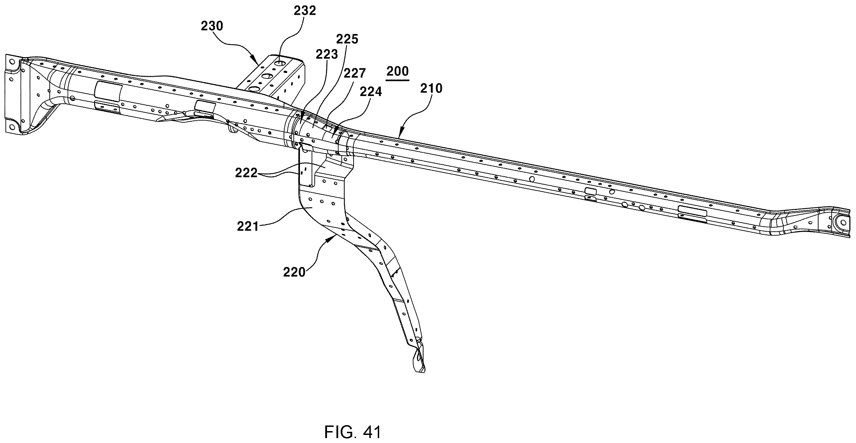

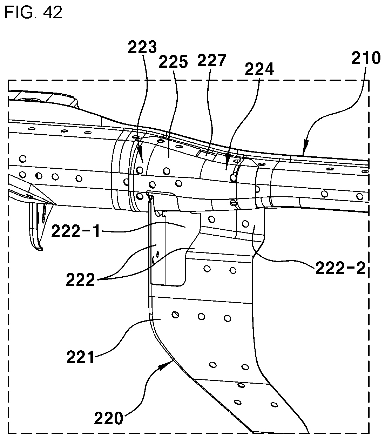

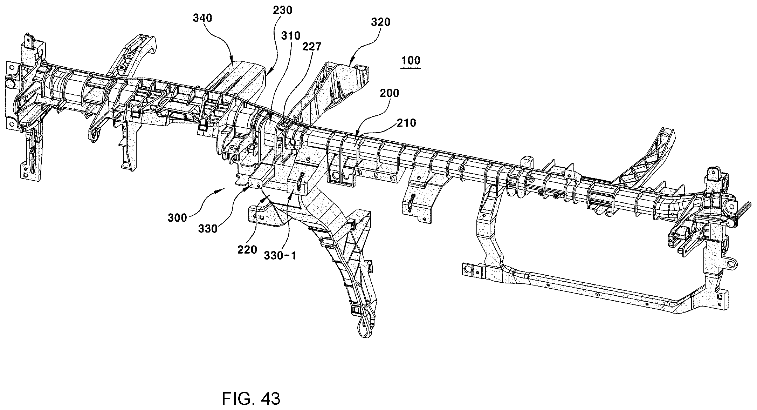

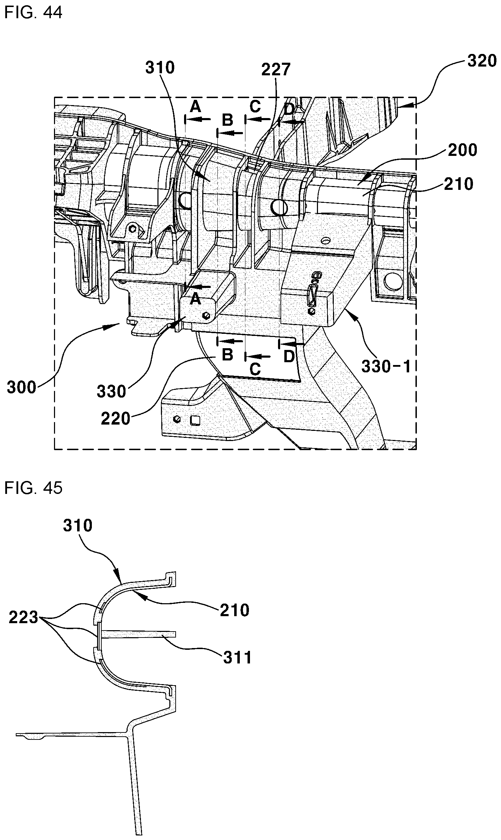

FIGs. 41 and 42 are perspective views showing a steel insert of a cowl cross bar according to a sixth embodiment of the present disclosure. FIGs. 43 and 44 are perspective views showing a steel insert plastic cowl cross bar according to the sixth embodiment of the present disclosure.

The steel insert plastic cowl cross bar according to the sixth embodiment of the present disclosure, which is designated by reference numeral "100", is fabricated by injecting a plastic material into a cavity of an injection mold under a predetermined pressure in a state in which a steel insert is inserted in the cavity of the injection mold, such that the steel insert plastic cowl cross bar has a complex structure including a steel insert 200 and a plastic injection-molded part 300.

The steel insert plastic cowl cross bar according to the sixth embodiment of the present disclosure has a configuration similar to that of the fifth embodiment described above, and is characterized in that the steel insert plastic cowl cross bar is configured through further inclusion of a connecting plate 225 mounted to a main beam 210 of a steel insert 200 while overlapping therewith and configured to integrally interconnect first and second mounting plates 223 and 224 included in a center support bracket 220, as shown in FIG. 42.

As shown in FIG. 41, the steel insert 200includes the main beam 210, which is fabricated to have a C-shaped cross-sectional structure opened forwards, the center support bracket 220, which is connected to a predetermined position of a rear surface of the main beam 210 while extending downwards, and a steering lower mounting bracket 230 connected to a predetermined position of a front surface of the main beam 210 while protruding forwards.

The main beam 210 is disposed in front of a driver seat and a passenger seat, to extend in a left/right direction, in other words, a lateral direction, and is fixed, at opposite ends thereof, to left and right panels of a vehicle body. Accordingly, the main beam 210 functions to maintain rigidity of the cowl cross bar 100 and functions as a frame for the cowl cross bar 100.

An upper end of the center support bracket 220 is mounted to the rear surface of the main beam 210. A lower end of the center support bracket 220 is mounted to a bottom panel of the vehicle body. Accordingly, the center support bracket 220 functions to support the main beam 210.

For this function, as shown in FIGs. 41 and 42, the center support bracket 220 includes a main frame 221. A lower end of the main frame 221 is mounted to the bottom panel of the vehicle body while extending in an upward/downward direction. The center support bracket 220 further includes a neck frame 222 integrally formed at an upper portion of the main frame 221, first and second mounting plates 223 and 224 formed at an upper portion of the neck frame 222 and mounted to the rear surface of the main beam 210 while overlapping therewith, and the connecting plate 225 mounted to the rear surface of the main beam 210 while overlapping therewith and configured to integrally interconnect the first and second mounting plates 223 and 224.

A molding hole 221-1 for molding of a cockpit mounting bracket 330, which is one constituent element of the plastic injection-molded part 300, is formed at one side portion of the neck frame 222, to extend therethrough. A bent portion 222-2, which has a "c"-shaped cross-section while protruding to be convex forwards, is formed at the other side portion of the neck frame 222, for easy removal of an injection mold.

In this case, the bent portion 222-2 not only provides a function for easily removing an injection mold, but also functions to reinforce rigidity of the neck frame 222 in order to prevent deformation of the neck frame 222 caused by collision energy.

The first mounting plate 223 and the second mounting plate 224 are plate structures having curved cross-sections extending upwards while forming two branches extending from one side position and the other side position of the neck frame 222, respectively. The first mounting plate 223 and the second mounting plate 224 are mounted to the rear surface of the main beam 210 through welding or the like while overlapping therewith. In addition, the connecting plate 225 integrally interconnecting the first and second mounting plates 223 and 224 is mounted to the rear surface of the main beam 210 through welding or the like while overlapping therewith.

Since the first mounting plate 223, the second mounting plate 224, and the connecting plate 225 are welded to the rear surface of the main beam 210 while overlapping therewith, it may be possible to reinforce rigidity of the main beam 210 and to prevent deformation of the main beam 210 caused by collision energy by virtue of the first mounting plate 223, the second mounting plate 224, and the connecting plate 225.

In particular, a coring hole 227 is formed at the main beam 210 and the second mounting plate 224 and extends through the main beam 210 and the second mounting plate 224 in an upward/downward direction. The coring hole 227 is used for plastic coring in order to enable formation of an impact absorption plate 329 at a vehicle body mounting bracket 320 included in the plastic injection-molded part 300.

The steel insert 200 having the above-described configuration is inserted into a cavity of an injection mold and is then subjected to an injection molding process in which a plastic material is injected into the cavity of the injection mold. As a result, the steel insert plastic cowl cross bar 100, which has a complex structure including the steel insert 200 and the plastic injection-molded part 300, may be fabricated.

As shown in FIGs. 43 and 44, the plastic injection-molded part 300, which is injection-molded on the steel insert 200, includes a main injection-molded part 310 molded on surfaces of the main beam 210 and the first and second mounting plates 223 and 224, the connecting plate 225, and the like of the steel insert 200 while overlapping therewith. The plastic injection-molded part 300 further include the vehicle body mounting bracket 320, which protrudes forwards from the front surface of the main beam 210, and the cockpit mounting bracket 330, which is molded to protrude rearwards while sealing a molding hole 222-1 of the neck frame 222.

The main injection-molded part 310 is injection-molded on surfaces of the main beam 210, the first and second mounting plates 223 and 224, the connecting plate 225, etc. while overlapping therewith and, as such, functions as a frame for the cowl cross bar 100, together with the main beam 210.

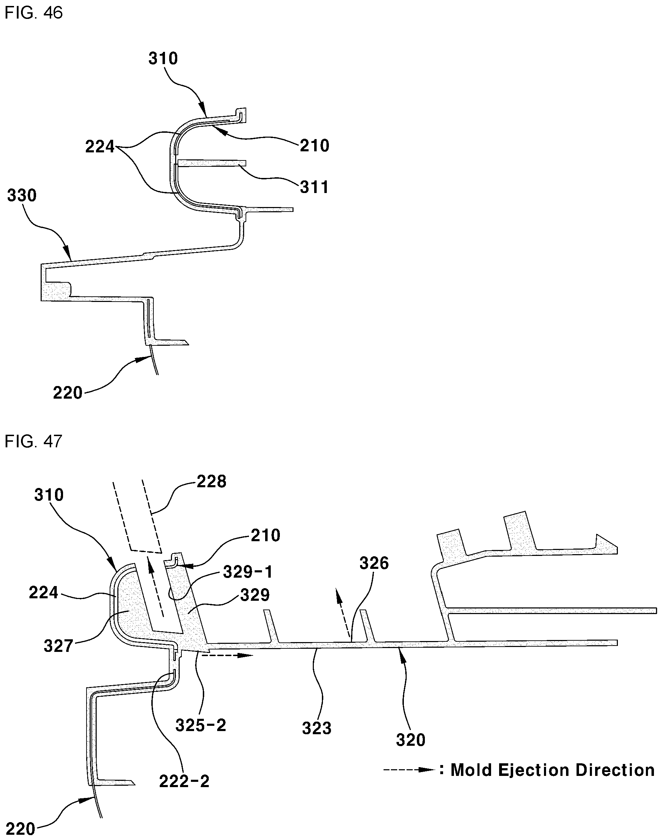

For this function, as shown in FIGs. 45 and 46, the main injection-molded part 310 includes a horizontal plate-shaped protector 311 not only molded on the rear surface of the main beam 210 and the surfaces of the first and second mounting plates 223 and 224 and the connecting plate 225 while overlapping therewith, but also molded on the front surface of the main beam 210, to protrude forwards, thereby protecting the main beam 210 from collision energy.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 and the connecting plate 225 overlap with the main beam 210 and, as such, rigidity of the main beam 210 is reinforced. As a result, it may be possible to prevent tearing or deformation of the cockpit mounting bracket 330 and an area therearound.

A front end of the vehicle body mounting bracket 320 is mounted to a predetermined position of the vehicle body and, as such, the vehicle body mounting bracket 320 not only functions to support the cowl cross bar 100, but also functions to primarily buffer collision energy caused by a collision.

As described above, the coring hole 227 is formed at the main beam 210 and the second mounting plate 224, to extend through the main beam 210 and the second mounting plate 224 in an upward/downward direction. The coring hole 227 is used for plastic coring in order to enable formation of the impact absorption plate 329 at the vehicle body mounting bracket 320 included in the plastic injection-molded part 300.

For formation of the coring hole 227, as shown in FIG. 47, the vehicle body mounting bracket 320 includes a reinforcing fillet 327 molded to fill a front surface portion of the main beam 210 (a concave portion formed in accordance with the C-shaped cross-section), the impact absorption plate 329, which is integrally connected to a lower end of the fillet 327, and a vehicle body mounting plate 323 assembled or coupled to a predetermined position of the vehicle body while extending forwards from a lower end of the fillet 327.

In this case, a plastic coring groove 329-1 is formed between the fillet 327 and the impact absorption plate 329, as shown in FIG. 47. As shown in FIG. 47, the plastic coring groove 329-1 may be formed as a mold 228 for plastic coring is removed upwards through the coring hole 227 formed at the main beam 210 and the second mounting plate 224.

Since the fillet 327 of the vehicle body mounting bracket 320 is integrally connected to the main beam 210 of the steel insert 200 through injection molding, rigidity reinforcement of the vehicle body mounting bracket 320 may be achieved, and the vehicle body mounting bracket 320 may be maintained in a forwardly protruding state.

In addition, the impact absorption plate 329 and the coring groove 329-1 of the vehicle body mounting bracket 320 function to absorb collision energy caused by forward collision and, as such, may attenuate collision energy transferred to the main beam 210 and the main injection-molded part 310. As a result, it may be possible to prevent deformation and breakage of the cowl cross bar 100.

In addition, as shown in FIG. 49, a fracture inducing notch 324 may be further formed at a neck portion of the vehicle body mounting bracket 320. Accordingly, the vehicle body mounting bracket 320 may primarily buffer collision energy caused by a collision and may be fractured at the fracture inducing notch 324 when collision energy is equal to or higher than a predetermined level. Thus, it may be possible to minimize transfer of collision energy to the main beam 210 of the steel insert 200 and the main injection-molded part 310.

Among the constituent elements of the cockpit module, the cockpit mounting bracket 330 functions to provide a mounting surface for elements disposed behind the cowl cross bar 100.

For this function, as shown in FIG. 44, the cockpit mounting bracket 330 is formed to have a shape protruding rearwards while sealing the molding hole 222-1 formed at one side portion of the neck frame 222.

Accordingly, when collision energy caused by a collision is transferred to the front end of the main injection-molded part 310 and the protector 311, it may be possible to minimize transfer of the collision energy to the cockpit mounting bracket 330 because the first and second mounting plates 223 and 224 overlap with the main beam 210 surrounded by the main injection-molded part 310, thereby reinforcing rigidity, as shown in FIGs. 45, 46, and 48. As a result, it may be possible to prevent tearing or deformation of the cockpit mounting bracket 330, which protrudes rearwards while sealing the molding hole 222-1, and an area around the cockpit mounting bracket 330.

In some examples, as shown in FIG. 44, another cockpit mounting bracket 330-1 may be further injection-molded on the main beam 210 at a position beyond the neck frame 222 of the center support bracket 220 such that the cockpit mounting bracket 330-1 protrudes rearwards. The cockpit mounting bracket 330-1 functions to provide a mounting surface for other constituent elements of the cockpit module.

Referring to FIG. 47, a forward/rearward mold ejection space 325-2 for removal of an injection mold in a forward/rearward direction is formed beneath the vehicle body mounting plate 323 of the vehicle body mounting bracket 320. In addition, an upward/downward mold ejection space 326 for removal of an injection mold in an upward/downward direction is formed over the vehicle body mounting plate 323.

Referring to FIG. 48, a forward/rearward mold ejection space 325-3 is also formed at the plastic injection-molded part surrounding the bent portion 222-2 of the neck frame 222, by virtue of the bent portion 222-2.

Accordingly, easy removal of a mold after execution of an injection molding process may be achieved by virtue of the forward/rearward mold ejection spaces 325-2 and 325-3, the upward/downward mold ejection space 326, etc.

Meanwhile, the steering lower mounting bracket 230, which functions to support a lower portion of a steering column or the like, is integrally connected to a predetermined position of the front surface of the main beam 210 of the steel insert 200 while protruding forwards.

Referring to FIG. 50, the steering lower mounting bracket 230 of the steel insert 200 is integrally connected to the main beam 210 by a steel bar 231 having a predetermined length.

Accordingly, when collision energy is applied to the steering lower mounting bracket 230, the steel bar 231 buffers the collision energy while being deformed. As a result, the steering column or the like mounted to the steering lower mounting bracket 230 may be prevented from moving substantially from an original position thereof, and penetration of the steering column or the like into the vehicle interior may be minimized.

The steering lower mounting bracket 230 of the steel insert 200 is also injection-molded using a plastic material. As such, the plastic injection-molded part 300 further includes a plastic injection-molded bracket 340 molded on the steel bar 231 and the steering lower mounting bracket 230.

In some examples, as shown in FIG. 50, a plurality of deformation inducing holes 232 are formed at an upper plate portion of the steering lower mounting bracket 230, to induce deformation of the steering lower mounting bracket 230 when the steering lower mounting bracket 230 absorbs collision energy.

Referring to FIGs. 51 and 52, the plastic injection-molded bracket 340 may include a first injection-molded bracket portion 341 molded to surround the steel bar 231, and a second injection-molded bracket portion 342 molded to overlap with an upper surface, opposite side surfaces, and a lower surface of the steering lower mounting bracket 230.

In addition, as shown in FIG. 51, a step 343 for induction of bending and fracture is formed at a boundary between upper surfaces of the first and second injection-molded bracket portions 341 and 342.

In this case, a floating nut 234 is welded to the steering lower mounting bracket 230, to be bolted to the vehicle body. In some examples, the floating nut 234 may be welded to the steering lower mounting bracket 230 before the plastic injection-molded part 300 is injection molded. This is because it is difficult to mold the floating nut through plastic insert injection molding.

Accordingly, when collision energy caused by forward collision is applied to the steering lower mounting bracket 230, the deformation inducing hole 232 absorbs initial collision energy while being deformed, and deformation of the steering lower mounting bracket 230 such as bending and/or fracture may be induced by the step 343 formed at the boundary between the first and second injection-molded bracket portions 341 and 342. In addition, the steel bar 231 is also deformed, thereby further buffering the collision energy. As a result, the steering column or the like mounted to the steering lower mounting bracket 230 may be prevented from moving substantially from an original position thereof, and penetration of the steering column or the like into the vehicle interior may be minimized. Thus, deformation of the cowl cross bar may be minimized, and injury of a passenger seated in the vehicle interior caused by the cowl cross bar may be prevented.

The present disclosure provides the following effects through the above-described configurations.

First, a plastic material is injection molded on to the steel insert, which includes the main beam, the center support bracket, and the like such that the cowl cross bar is fabricated to have a complex structure including the steel insert and the plastic injection-molded part. Accordingly, it may be possible to reduce the weight of and improve the fuel economy of an electrified vehicle.

Furthermore, the main beam of the steel insert is fabricated to have a C-shaped cross-sectional structure. As such, the steel insert may be lighter, as compared to a main beam of a cowl cross bar made of a steel material is fabricated to have a pipe shape.

Second, since the cowl cross bar is fabricated to have a complex structure including the steel insert and the plastic injection-molded part, it may be possible to enhance rigidity, as compared to the conventional cowl cross bar made of a steel material.

Third, since the cowl cross bar is fabricated to have a complex structure including the steel insert and the plastic injection-molded part, it may be possible to enhance isolation performance against road vibration, thereby reducing vibration transmitted to a steering wheel, as compared to the conventional cowl cross bar made of a steel material.

The present inventive concept has been described in detail with reference to several embodiments thereof. However, it should be appreciated by those of ordinary skill in the art that changes or modifications may be made to the embodiments described herein without departing from the principles and spirit of the present inventive concept, the scope of which is defined in the appended claims and their equivalents.

## Claims

1. A steel insert plastic cowl cross bar comprising:
a steel insert including a main beam and a center support bracket mounted to the main beam; and
a plastic injection-molded part injection-molded on the steel insert,
wherein the center support bracket includes
a main frame mounted to a lower portion of a vehicle body,
a neck frame formed at an upper portion of the main frame, and
first and second mounting plates formed at an upper portion of the neck frame and mounted to the main beam,
wherein the plastic injection-molded part includes
a main injection-molded part molded on the main beam and the first and second mounting plates while overlapping therewith, and
a vehicle body mounting bracket molded on the main beam and the second mounting plate while overlapping therewith and protruding forward.

2. The steel insert plastic cowl cross bar according to claim 1, wherein the plastic injection-molded part further includes a cockpit mounting bracket molded on one side portion of the neck frame and protruding rearward.

3. The steel insert plastic cowl cross bar according to claim 1 or 2, wherein the center support bracket further includes a connecting plate mounted to the main beam while integrally interconnecting the first and second mounting plates.

4. The steel insert plastic cowl cross bar according to any one of the preceding claims, wherein a molding hole for molding of the cockpit mounting bracket is formed at the one side portion of the neck frame and extends through the one side portion of the neck frame.

5. The steel insert plastic cowl cross bar according to any one of the preceding claims, wherein a bent portion having a "c"-shaped cross-section while protruding to be convex forwards is formed at another side portion of the neck frame for removal of a mold.

6. The steel insert plastic cowl cross bar according to any one of the preceding claims, wherein:
the vehicle body mounting bracket includes
a reinforcing fillet molded to fill a front surface portion of the main beam, and
a vehicle body mounting bracket extending forwards from a lower portion of the fillet;
the fillet is formed to have a coring groove structure in accordance with rotational removal of a core mold or is formed as a horizontal plate-shaped protector having a coring groove in accordance with removal of a core mold through horizontal movement; and
a forward/rearward mold ejection space for removal of a mold in a forward/rearward direction is formed beneath the vehicle body mounting plate.

7. The steel insert plastic cowl cross bar according to claim 6, wherein a fracture inducing notch is formed at a neck portion of the vehicle body mounting bracket.

8. The steel insert plastic cowl cross bar according to any one of the preceding claims, wherein:
the steel insert further includes a steering lower mounting bracket connected to the main beam by the steel bar; and
the plastic injection-molded part further includes a plastic injection-molded bracket molded on the steel bar and the steering lower mounting bracket.

9. The steel insert plastic cowl cross bar according to claim 8, wherein the plastic injection-molded bracket includes a first injection-molded bracket portion molded to surround the steel bar and a second injection-molded bracket portion molded to overlap with an upper surface, opposite side surfaces, and a lower surface of the steering lower mounting bracket.

10. The steel insert plastic cowl cross bar according to claim 9, wherein a step for induction of bending and fracture is formed at a boundary between upper surfaces of the first and second injection-molded bracket portions.

11. The steel insert plastic cowl cross bar according to any one of claims 8 to 10, wherein a deformation inducing hole is formed at an upper plate portion of the steering lower mounting bracket to induce deformation of the steering lower mounting bracket when the steering lower mounting bracket absorbs collision energy.
